# EUROPEAN PATENT APPLICATION

(11) **EP 4 371 804 A1**
(43) Date of publication of application: **22.05.2024**
(21) Application number: 22842427.1
(22) Date of filing: 12.07.2022
(51) Int. Cl.: B60L 53/16, B60L 53/35

(54) **CONTROL METHOD AND POWER SUPPLY DEVICE FOR OPENING AND CLOSING ELECTRIC VEHICLE CHARGING DOOR/PORT**

(30) Priority: 12.07.2021 KR 20210091206; 23.07.2021 US 202163225088 P; 11.07.2022 KR 20220085120
(71) Applicant: HYUNDAI MOTOR COMPANY, Seoul 06797 (KR); Kia Corporation, Seocho-gu Seoul 06797 (KR); Myongji University Industry and Academia Cooperation Foundation, Gyeonggi-do 17058 (KR)
(72) Inventor: SEONG, Jae Yong, Hwaseong-si, Gyeonggi-do 18280 (KR); SHIN, Min Ho, Yongin-si, Gyeonggi-do 17058 (KR)
(74) Representative: Isarpatent
(86) International application number: PCT/KR2022/010130
(87) International publication number: WO 2023/287165

(57) **Abstract**

A control method for opening/closing of electric vehicle charging door is executed by electric vehicle supply equipment (EVSE) including a charging manipulator. The method includes steps of: positioning the charging manipulator at a location corresponding to the charging door of an electric vehicle; performing a protocol to open the charging door; checking whether the charging door is opened; and coupling the charging manipulator to the inlet of the charging door.

## Description

### TECHNICAL FIELD

The present disclosure relates to an electric vehicle supply equipment (EVSE) including a charging manipulator for charging an electric vehicle, more particularly, to a control protocol for opening and closing a charging door or charging port of the electric vehicle.

### BACKGROUND ART

An electric vehicle (EV) is driven by an electric motor by power stored in a battery, and produces less pollution such as exhaust gas and noise compared with a conventional gasoline engine vehicle, and have advantages of fewer faults, a longer life span, and simplified driving operations.

The EVs may be classified into hybrid electric vehicles (HEVs), plug-in hybrid electric vehicles (PHEVs), and electric vehicles (EVs) based on a driving power source. The HEV has an engine as a main power source and a motor as an auxiliary power source. The PHEV has a motor and a battery as main power sources and an engine that is used when the battery is discharged. The EV has a motor but does not have an engine.

An electric vehicle charging system may be defined as a system that charges the battery mounted in the electric vehicle using electric power obtained from a commercial power grid or stored in an energy storage device. Such an electric vehicle charging system may have various forms depending on a type of the electric vehicle. For example, the electric vehicle charging system may include a conductive charging system using a cable or a non-contact wireless power transfer system.

During a charging session, a vehicle assembly (VA) mounted on the electric vehicle may form an inductive resonance coupling with a transmission pad of a ground assembly (GA) installed at a charging station or a charging spot and may charge the battery of the EV using electric power transferred from the ground assembly through the inductive resonance coupling.

While the EV is being charged at the charging station, a robot arm or manipulator may be used to supply the electric power from an electric vehicle supply equipment (EVSE) to a charging door or charging port of the electric vehicle.

Considering various types of the charging port of the electric vehicle, various types of electric vehicle supply equipment, and various charging schemes, it is necessary to define a procedure for positioning the charging manipulator with respect to the electric vehicle and preparatory operations for the power transfer.

### DISCLOSURE OF INVENTION

### TECHNICAL PROBLEM

To solve the above problems, one object of the present disclosure is to define and provide a procedure for positioning a charging manipulator with respect to an electric vehicle and for preparatory operations for a power transfer in consideration of various types of the charging port of the electric vehicle, various types of the electric vehicle supply equipment, and various charging schemes that may be used when electric power is supplied from a power supply device or an electric vehicle supply equipment (EVSE) to the electric vehicle.

Another object of the present disclosure is to define and provide a control procedure for opening and closing the charging port of the electric vehicle to respond to various types of the charging inlet of the electric vehicle, various types of the electric vehicle supply equipment, and various charging schemes.

Another object of the present disclosure is to define and provide a control procedure for opening and closing a charging inlet of the electric vehicle to respond to various types of the charging inlet of the electric vehicle, various types of the electric vehicle supply equipment, and various charging schemes.

Another object of the present disclosure is to define and provide a procedure for operations of the positioning of the charging manipulator with respect to the electric vehicle, a mating of the charging manipulator and the electric vehicle, and an unmating of the charging manipulator and the electric vehicle after a completion of the charging to respond to various types of the charging port of the electric vehicle, various types of the electric vehicle supply equipment, and various charging schemes.

Another object of the present disclosure is to define and provide a positioning procedure for positioning the charging manipulator with respect to the electric vehicle taking into account characteristics of a parking space of the electric vehicle, the type of the parking space, and a state of the electric vehicle while the charging is in progress.

### TECHNICAL SOLUTION

According to an aspect of an exemplary embodiment, a method of controlling opening and closing of a charging door of an electric vehicle for achieving the above objects is performed by an electric vehicle supply equipment (EVSE) comprising a charging manipulator. The method includes: positioning the charging manipulator at a position corresponding to the charging door of the electric vehicle; performing a protocol for opening the charging door; checking whether the charging door is opened or not; and coupling the charging manipulator to an inlet of the charging door.

The method of controlling the opening and closing of the charging door according to an exemplary embodiment may further include: unmating the charging manipulator from the inlet when a power transfer process for the electric vehicle is completed or terminated; performing a protocol for closing the charging door; and checking whether the charging door is closed or not.

The method of controlling the opening and closing of the charging door according to an exemplary embodiment may further include: receiving, from the electric vehicle, at least one of a shape, an opening type, or an opening direction of the charging door.

The method of controlling the opening and closing of the charging door according to an exemplary embodiment may further include: receiving, from the electric vehicle, information on whether an inlet cover is formed independently from the charging door or not.

The method of controlling the opening and closing of the charging door according to an exemplary embodiment may further include: performing a protocol for opening an inlet cover of the electric vehicle before the charging manipulator is coupled to the inlet in a state that charging door is found to be open; and checking whether the inlet cover is opened or not.

The method of controlling the opening and closing of the charging door according to an exemplary embodiment may further include: before performing the protocol for closing the charging door in a state that the charging door is found to be unmated from the inlet, performing a protocol for closing the inlet cover; and checking whether the inlet cover is closed or not.

The operation of positioning the charging manipulator at the position corresponding to the charging door of the electric vehicle may include: determining a moving path of the charging manipulator, to move the charging manipulator to the position corresponding to the charging door, based on at least one of a position of the charging door relative to the electric vehicle, a distance from the electric vehicle to an adjacent vehicle, or a distance from the electric vehicle to the adjacent vehicle on an assumption that the charging door is opened.

The operation of performing the protocol for opening the charging door may include: sharing with the electric vehicle that the charging manipulator is positioned at the position corresponding to the charging door; receiving, from the electric vehicle, a request for permission to open the charging door; and receiving, from the electric vehicle, a notification indicating that the charging door is opened.

The operation of performing the protocol for opening the charging door may include: sharing with the electric vehicle that the charging manipulator is positioned at the position corresponding to the charging door; receiving, from the electric vehicle, a request to open the charging door; controlling the charging manipulator to open the charging door based on at least one of a shape, an opening type, or an opening direction of the charging door; and receiving, from the electric vehicle, a notification indicating that the charging door is opened.

The operation of performing the protocol for opening the charging door may include: sharing with the electric vehicle that the charging manipulator is positioned at the position corresponding to the charging door; receiving, from the electric vehicle, a notification indicating that a process of opening the charging door by a manual manipulation of a human is in progress; and receiving, from the electric vehicle, a notification indicating that the charging door is opened.

According to another aspect of an exemplary embodiment, an electric vehicle supply equipment (EVSE) apparatus suitable for transferring electric power to an electric vehicle and including a charging manipulator, includes: a memory configured to store at least one program instruction; a processor configured to load and execute the at least one program instruction to control a movement of the charging manipulator; and a communication interface configured to transmit and receive information necessary for a power transfer process for the electric vehicle to and from the electric vehicle.

The processor is configured to control the charging manipulator to position the charging manipulator at a position corresponding to a charging door of the electric vehicle. The processor is configured to perform a protocol for opening the charging door by communicating with the electric vehicle through the communication interface. The processor is configured to check whether the charging door is opened or not. The processor is configured to control the charging manipulator such that the charging manipulator is coupled to an inlet of the charging door in a state that the charging door is opened.

The processor may be configured to: control the charging manipulator such that the charging manipulator is unmated from the inlet when the power transfer process for the electric vehicle is completed or terminated; perform a protocol for closing the charging door by communicating with the electric vehicle through the communication interface; and check whether the charging door is closed or not.

The processor may be configured to receive, from the electric vehicle, at least one of a shape, an opening type, or an opening direction of the charging door by communicating with the electric vehicle through the communication interface.

The processor may be configured to receive, from the electric vehicle, information on whether an inlet cover is formed independently from the charging door or not by communicating with the electric vehicle through the communication interface.

The processor may be configured to determine a moving path of the charging manipulator, to move the charging manipulator to the position corresponding to the charging door, based on at least one of a position of the charging door relative to the electric vehicle, a distance from the electric vehicle to an adjacent vehicle, or a distance from the electric vehicle to the adjacent vehicle on an assumption that the charging door is opened.

According to another aspect of an exemplary embodiment, provided is a method of controlling opening and closing of a charging door of an electric vehicle performed by the electric vehicle capable of communicating with an electric vehicle supply equipment (EVSE) comprising a charging manipulator. The method includes: receiving information on whether the charging manipulator is positioned at a position corresponding to the charging door of the electric vehicle; performing a protocol for opening the charging door; checking whether the charging door is opened or not; and recognizing whether the charging manipulator is coupled to the charging door.

The method of controlling the opening and closing of the charging door according to an exemplary embodiment may further include: receiving identification information for a plurality of EVSEs; and selecting the EVSE comprising the charging manipulator among the plurality of EVSEs.

The method of controlling the opening and closing of the charging door according to an exemplary embodiment may further include: guiding a user to move to park the electric vehicle within an operating range of the EVSE comprising the charging manipulator among the plurality of EVSEs, or guiding the user to park the electric vehicle within the operating range of the EVSE comprising the charging manipulator.

The method of controlling the opening and closing of the charging door according to an exemplary embodiment may further include: providing the EVSE with at least one of information on whether the electric vehicle can automatically open the charging door or information on whether the electric vehicle can automatically close the charging door.

The method of controlling the opening and closing of the charging door according to an exemplary embodiment may further include: receiving, from the EVSE, at least one of information on whether the charging manipulator can automatically open the charging door or information on whether the charging manipulator can automatically close the charging door.

### ADVANTAGEOUS EFFECTS

According to an exemplary embodiment, provided is a procedure for positioning a charging manipulator with respect to an electric vehicle and for preparatory operations for a power transfer in consideration of various types of the charging port of the electric vehicle, various types of the electric vehicle supply equipment, and various charging schemes that may be used when electric power is supplied from a power supply device or an electric vehicle supply equipment (EVSE) to the electric vehicle.

According to an exemplary embodiment, provided is a control procedure for opening and closing the charging port of the electric vehicle to respond to various types of the charging inlet of the electric vehicle, various types of the electric vehicle supply equipment, and various charging schemes.

According to an exemplary embodiment, provided is a control procedure for opening and closing a charging inlet of the electric vehicle to respond to various types of the charging inlet of the electric vehicle, various types of the electric vehicle supply equipment, and various charging schemes.

According to an exemplary embodiment, provided is a procedure for operations of the positioning of the charging manipulator with respect to the electric vehicle, a mating of the charging manipulator and the electric vehicle, and an unmating of the charging manipulator and the electric vehicle after a completion of the charging to respond to various types of the charging port of the electric vehicle, various types of the electric vehicle supply equipment, and various charging schemes.

According to an exemplary embodiment, provided is a positioning procedure for positioning the charging manipulator with respect to the electric vehicle taking into account characteristics of a parking space of the electric vehicle, the type of the parking space, and a state of the electric vehicle while the charging is in progress.

### DESCRIPTION OF DRAWINGS

FIG. 1 is an illustration of an electric vehicle charging process to which an exemplary embodiment of the present disclosure is applicable;
FIG. 2 is a conceptual diagram illustrating an electric vehicle charging system to which an exemplary embodiment of the present disclosure is applicable;
FIGS. 3 and 4 illustrate a Cartesian coordinate system compatible with a definition in SAE J2954 standard and applicable to an embodiment of the present disclosure;
FIG. 5 illustrates a robot charging system for sidearm connection interface (ACD-S) applicable to an exemplary embodiment of the present disclosure;
FIG. 6 illustrates positions where a charging port may be formed in an electric vehicle according to an exemplary embodiment of the present disclosure;
FIG. 7 illustrates an example of a non-parallel type parking space for explaining a preparation of an electric vehicle charging according to an exemplary embodiment of the present disclosure;
FIG. 8 illustrates an example of a parallel type parking space for explaining a preparation of an electric vehicle charging according to an exemplary embodiment of the present disclosure;
FIGS. 9 and 10 are flowcharts illustrating exemplary methods of controlling an opening and closing of a charging port performed by a charging manipulator or charging system according to an exemplary embodiment of the present disclosure;
FIGS. 11 and 12 are state diagrams illustrating an exemplary method of controlling the opening and closing of the charging port performed by the charging manipulator or charging system according to an exemplary embodiment of the present disclosure;
FIGS. 13 and 14 are flowcharts illustrating an example of a method of controlling opening and closing of a charging port performed by a charging manipulator or a charging system according to an embodiment of the present disclosure;
FIGS. 15 through 17 illustrate a protocol for controlling the opening and closing of the charging port by the charging manipulator or the charging system according to an exemplary embodiment of the present disclosure;
FIG. 18 is a table summarizing details of an operation S1000 shown in FIG. 15 according to an exemplary embodiment;
FIG. 19 is a table summarizing details of an operation S1112 shown in FIG. 13 according to an exemplary embodiment;
FIG. 20 is a table summarizing details of an operation S1114 shown in FIG. 13 according to an exemplary embodiment;
FIG. 21 is a table summarizing details of operations S1120 and S1130 shown in FIG. 13 according to an exemplary embodiment;
FIG. 22 is a table summarizing details of operations S1230 and S1240 shown in FIG. 14 according to an exemplary embodiment; and
FIG. 23 is a block diagram illustrating a general configuration of hardware that controls the opening and closing of the charging door or charging port in preparation for the charging of the electric vehicle in relation to the electric vehicle charging system and/or the charging manipulator according to an embodiment of the present disclosure.

### BEST MODE

For a clearer understanding of the features and advantages of the present disclosure, exemplary embodiments of the present disclosure will be described in detail with reference to the accompanied drawings. However, it should be understood that the present disclosure may be not be limited to particular embodiments disclosed herein but includes all modifications, equivalents, and alternatives falling within the spirit and scope of the present disclosure. In the drawings, similar or corresponding components may be designated by the same or similar reference numerals.

The terminologies including ordinals such as "first" and "second" or another identifiers such as "A" and "B" may be used to discriminate a component from the other ones but may not be intended to be limiting to a specific component. For example, a second component may be referred to as a first component and, similarly, a first component may also be referred to as a second component without departing from the scope of the present disclosure. As used herein, the term "and/or" may include a presence of one or more of the associated listed items and any and all combinations of the listed items.

When a component is referred to as being "connected" or "coupled" to another component, the component may be directly connected or coupled logically or physically to the other component or indirectly through an object therebetween. Contrarily, when a component is referred to as being "directly connected" or "directly coupled" to another component, it is to be understood that there is no intervening object between the components. Other words used to describe the relationship between elements should be interpreted in a similar fashion.

The terminologies may be used herein for the purpose of describing particular exemplary embodiments only and may not be intended to limit the present disclosure. The singular forms include plural referents as well unless the context clearly dictates otherwise. Also, the expressions "comprises" or "includes" may be used to refer a presence of a combination of stated features, numbers, processing steps, operations, elements, or components, but may not be intended to preclude a presence or addition of another feature, number, processing step, operation, element, or component.

Unless defined otherwise, all terms used herein, including technical or scientific terms, have the same meaning as commonly understood by those of ordinary skill in the art to which the present disclosure pertains. Terms such as those defined in a commonly used dictionary should be interpreted as having meanings consistent with their meanings in the context of related literatures and will not be interpreted as having ideal or excessively formal meanings unless explicitly defined in the present application.

Terms used in the present disclosure are defined as follows.

"Electric Vehicle (EV)": An automobile, as defined in 49 CFR 523.3, intended for highway use, powered by an electric motor that draws current from an on-vehicle energy storage device, such as a battery, which is rechargeable from an off-vehicle source, such as residential or public electric service or an on-vehicle fuel powered generator.

The EV may include an electric vehicle, an electric automobile, an electric road vehicle (ERV), a plug-in vehicle (PV), an electromotive vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

"Plug-in Electric Vehicle (PEV)": An Electric Vehicle that recharges the on-vehicle primary battery by connecting to the power grid.

"Plug-in vehicle (PV)": An electric vehicle rechargeable via wireless charging from an electric vehicle supply equipment (EVSE) without using a physical plug or a physical socket.

"Heavy duty vehicle (H.D. Vehicle)": Any four-or more wheeled vehicle as defined in 49 CFR 523.6 or 49 CFR 37.3 (bus).

"Light duty plug-in electric vehicle": A three or four-wheeled vehicle propelled by an electric motor drawing current from a rechargeable storage battery or other energy devices for use primarily on public streets, roads and highways and rated at less than 4,545 kg gross vehicle weight.

"Wireless power charging system (WCS)": A system for wireless power transfer and control of interactions including operations for an alignment and communications between a supply device (or ground assembly) and an EV device (or vehicle assembly).

"Wireless power transfer (WPT)": A transfer of electric power between a power source such as a utility, the power grid, an energy storage device, a fuel cell generator and the EV through a contactless channel such as electromagnetic induction and resonance.

"Utility": A set of systems which supply electrical energy and include a customer information system (CIS), an advanced metering infrastructure (AMI), rates and revenue system, etc. The utility may provide an EV with energy through rates table and discrete events. Also, the utility may provide information related to certification on EVs, interval of power consumption measurements, and tariff.

"Smart charging": A system in which EVSE and/or EV (including the PEV, or PHEV) communicate with power grid to optimize charging ratio or discharging ratio of EV by reflecting capacity of the power grid or expense of use.

"Automatic charging": A procedure in which inductive charging is automatically performed after a vehicle is located in a proper position corresponding to a primary charger assembly which may transfer power by a conductive or inductive charging. The automatic charging may be performed after obtaining necessary authentication and right.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

"Inductive charging system": A system transferring energy from a power source to an EV via a two-part gapped core transformer in which the two halves of the transformer, i.e., primary and secondary coils, are physically separated from one another. In the present disclosure, the inductive charging system may correspond to an EV power transfer system.

"Inductive coupler": A transformer formed by the primary coil in the primary device or a ground assembly (GA) and the secondary coil in the secondary device or a vehicle assembly (VA) that allows power to be transferred through electric isolation.

"Inductive coupling": A magnetic coupling between two coils. One of the two coils may refer to a primary coil or GA coil, and the other one of the two coils may refer to a secondary coil or vehicle assembly VA coil.

"Supply Power Circuit (SPC) or "Ground assembly (GA)": An assembly disposed on a primary device or the ground assembly or an infrastructure side including the primary coil (or GA coil) and other components. The other components may include at least one part to control the impedance and resonant frequency, a ferrite enforcing the magnetic path, and electromagnetic shielding materials. For example, the SPC or GA may include a power/frequency conversion unit and a SPC controller (or GA controller) necessary to function as a power source of a wireless power charging system, a wiring from the grid, and wirings between each unit, filtering circuits, and a housing.

"EV power circuit (EVPC)" or "Vehicle assembly (VA)": An assembly mounted on the vehicle including the secondary coil (or VA Coil) and other components. The other components may include at least one part to control the impedance and resonant frequency, a ferrite enforcing the magnetic path, and electromagnetic shielding materials. For example, the EVPC or VA may include a power/frequency conversion unit and a EVPC controller (or VA controller) necessary to as the vehicle part of a wireless power charging system, wiring to the vehicle batteries, and wirings between each unit, filtering circuits, and a housing.

The SPC may be referred to as or identified by the ground assembly (GA) or the like. Similarly, the EVPC may be referred to as or identified by the vehicle assembly (VA) or the like.

The GA may be referred to as the primary device, or the like, and the VA may be referred to as the EV device, the secondary device, or the like.

The GA may be referred to as the supply device, a power supply side device, or the like, and the VA may be referred to as the EV device, an EV side device, or the like.

"Primary device": An apparatus providing the contactless coupling to the secondary device. In other words, the primary device may be an apparatus external to an EV. When the EV is receiving power, the primary device may operate as the source of the power to be transferred. The primary device may include the housing and all covers.

"Secondary device": An apparatus mounted on the EV providing the contactless coupling to the primary device. In other words, the secondary device may be provided within the EV. When the EV is receiving power, the secondary device may transfer the power from the primary device to the EV. The secondary device may include the housing and all covers.

"Supply Power Electronics" indicates a portion of the SPC or GA regulating an output power level of the primary coil (or GA Coil) based on information from the vehicle. "EV Power Electronics" indicates a portion of the EVPC or VA monitoring specific on-vehicle parameters during the charging and initiating communications with the EVPC or GA to facilitate the adjustment of the output power level.

The Supply Power Electronics may be referred to as GA electronics, a GA controller, or a primary device communication controller (PDCC), and the EV Power Electronics may be referred to as VA electronics, a VA controller, or an electric vehicle communication controller (EVCC).

"Magnetic gap": A vertical distance between the plane of the higher of the top of the litz wire or the top of the magnetic material in the primary coil/GA Coil to the plane of the lower of the bottom of the litz wire or the magnetic material in the secondary coil/VA Coil when aligned.

"Ambient temperature": A ground-level temperature of the air measured at a subsystem under consideration and not in direct sun light.

"Vehicle ground clearance": A vertical distance between a ground surface and a lowest part of a vehicle floor pan.

"Vehicle magnetic ground clearance": A vertical distance between the plane of the lower of the bottom of the litz wire or the magnetic material in the secondary coil or VA Coil mounted on the vehicle to the ground surface.

"Secondary coil surface distance" or "VA coil magnetic surface distance": A distance between a plane of a nearest magnetic or conducting component surface to a lower external surface of the secondary coil or VA coil when mounted. Such a distance may include any protective coverings and additional items which may be packaged in the secondary coil or VA coil enclosure.

The secondary coil may be referred to as the VA coil, a vehicle coil, or a receiver coil. Similarly, the primary coil may be referred to as the GA coil or a transmit coil.

"Exposed conductive component": A conductive component of electrical equipment (e.g., an electric vehicle) that may be touched, and is not normally energized but may become energized when a fault occurs.

"Hazardous live component": A live component which, under certain conditions, may generate a harmful electric shock.

"Live component": Any conductor or conductive component intended to be electrically energized in normal use.

"Direct contact": A contact of a person with a live component. See IEC 61140 standard.

"Indirect contact": A contact of a person with exposed, conductive, and energized components made live by an insulation failure. See IEC 61140 standard.

"Alignment": A process of finding a relative position of the secondary device with respect to the primary device and/or a relative position of the primary device with respect to the secondary device for an efficient power transfer. In the present disclosure, the alignment may be directed to the alignment in the wireless power transfer system but may not be limited thereto.

"Pairing": A process of associating the vehicle (EV) with a single dedicated supply device (primary device) disposed such that the power transfer may occur. The pairing may include a process of associating the EVPC or VA controller with the SPC or GA controller of the charging spot.

The correlation or association process may include a process of establishing a relationship between two peer communication entities.

"Command and control communications": Communications for exchanging information required for starting, controlling, and ending the wireless power transfer process between an electric vehicle power supply equipment and an electric vehicle.

"High-level communication (HLC)": A digital communication capable of handling all information not covered by the command and control communications. The data link of the HLC may use a power line communication (PLC) but is not limited thereto.

"Low-power excitation (LPE)": A technique of activating the supply device (or primary device) for the fine positioning and pairing so that the EV may detect the supply device, and vice versa.

"Service set identifier (SSID)": A unique identifier including 32-characters attached to a header of a packet transmitted on a wireless LAN. The SSID identifies the basic service set (BSS) to which the wireless device attempts to connect. The SSID distinguishes multiple wireless LANs. Therefore, all access points (APs) and all terminal/station devices that want to use a specific wireless LAN may use the same SSID. Devices that do not use a unique SSID are not able to join the BSS. Because the SSID is shown as plain text, the SSID may not provide any security features to the network.

"Extended service set identifier (ESSID)": A name of the network to which one desires to connect. ESSID is similar to SSID but a more extended concept.

"Basic service set identifier (BSSID)": BSSID including 48bits is used to distinguish a specific BSS. With an infrastructure BSS network, the BSSID may be configured for medium access control (MAC) of the AP equipment. For an independent BSS or Ad-hoc network, the BSSID may be generated with any value.

The charging station may include at least one GA and at least one GA controller configured to manage the at least one GA. The GA may include at least one wireless communication device. The charging station may refer to a place or location including at least one GA, which is provided in home, office, public place, road, parking area, etc.

In the present specification, "association" may be used as a term representing a procedure for establishing wireless communication between the electric vehicle communication controller (EVCC) and the supply equipment communication controller (SECC) controlling the charging infrastructure.

Exemplary embodiments of the present disclosure will now be described in detail with reference to the accompanying drawings.

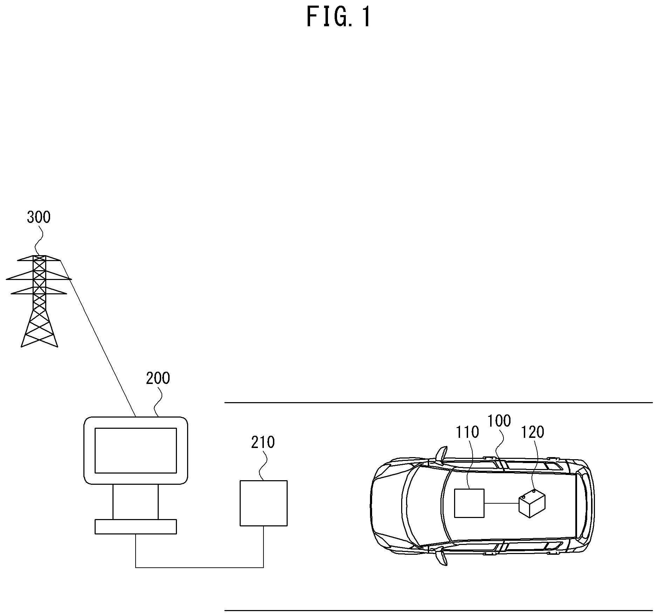

FIG. 1 is an illustration of an electric vehicle charging process to which an exemplary embodiment of the present disclosure may be applied.

As shown in FIG. 1, the electric vehicle charging process may be performed by at least one component of an electric vehicle (EV) 100 and a charging station 200 and may be used for transferring electric power to the EV 100 by a conductive charging or a wireless power transfer.

The EV 100 according to an exemplary embodiment of the present disclosure may include a hybrid electric vehicle (HEV) having an electric motor as well as an internal combustion engine, and may include not only an automobile but also a motorcycle, a cart, a scooter, and an electric bicycle.

The EV 100 may generally be defined as a vehicle that supplies an electric power derived from a rechargeable energy storage such as a battery 120 to an electric motor in a power train system of the EV 100.

The EV 100 may include a power reception pad 110 having a reception coil suitable for receiving the electric power for charging the battery 120 by the wireless power transfer or and may include a plug receptacle or inlet suitable for receiving the electric power for charging the battery 120 by the conductive charging. In particular, the EV 100 configured for conductively charging the battery 1200 may be referred to as the plug-in electric vehicle (PEV).

The charging station 200 may be connected to the power grid 300 or a power backbone, and may provide the AC power received from the power grid 300 or the power backbone to a power transfer pad 210 having a transmission coil through a power link.

The charging station 200 may communicate with the power grid 300, or an infrastructure management system or an infrastructure server managing the power grid, and may be configured to perform wireless communications with the EV 100. The wireless communications may be performed through Bluetooth, Zigbee, cellular, wireless local area network (WLAN), or the like.

The charging station 200 may be located at various places including a parking area of the owner' s house of the EV 100, a parking lot for charging the EV at a gas station, a parking lot at a shopping center or a workplace, or the like, but is not limited thereto.

The wireless power transfer to the battery 120 of the EV 100 may be performed as follows. First, the power reception pad 110 of the EV 100 is disposed in an energy field over the power transfer pad 210. Then the reception coil in the power reception pad 210 and the transmission coil in the power transfer pad 110 may be coupled to and interact each other. An electromotive force may be induced in the power reception pad 110 as a result of the coupling or the interaction, and the battery 1200 may be charged by the induced electromotive force.

The charging station 200 and the power transfer pad 210 as a whole or in part may be referred to as the supply power circuit (SPC) or the ground assembly (GA), of which meaning and function were defined above.

Also, the power reception pad 110 along with all or some of the other internal components of the EV 100 may be referred to as the EV power circuit (EVPC) or the vehicle assembly (VA), of which meaning and function were defined above.

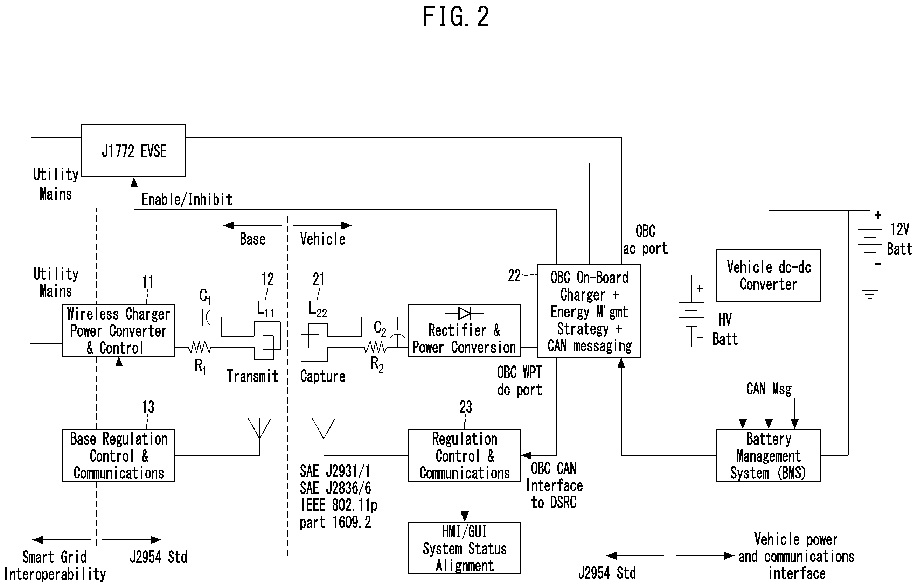

FIG. 2 is a conceptual diagram illustrating an electric vehicle charging system to which an exemplary embodiment of the present disclosure may be applied.

As shown in FIG. 2, the EV charging system may include a conductive charging system using a cable or a non-contact wireless power transfer (WPT) system, but is not limited thereto. The EV charging system may be basically defined as a system providing the EV with the electric power from a commercial power grid or an energy storage device so that the EV charges the battery mounted in the EV. The EV charging system may have various forms depending on the type of the EV.

For example, one of the most representative industrial standards for wireless charging, SAE TIR J2954, establishes industry-standard specification guidelines that define acceptable criteria for interoperability, electromagnetic compatibility, minimum performance, safety and testing for wireless charging of light-duty electric and plug-in electric vehicles. It will be apparent to those skilled in the art that similar guidelines may also be applicable to the conductive charging system.

As an example of the wireless charging system, the wireless charging system (WCS) according to the J2954 standard may include a grid interface, a high frequency power inverter, power transfer coils, a filter, a rectifier, an optional regulator, and communication circuits between the vehicle energy charging/storage system and a grid connected power inverter. The grid interface may be similar to a conventional EVSE connection for single or three-phase AC power. It will be apparent to those skilled in the art that such a basic configuration may also be applicable to the conductive charging system.

The wireless charging system for electric vehicles may include following three major partitions:
(1) a grid-connected converter 11 with a GA coil 12 for power coupling, with a communication link 13 to the vehicle system;
(2) a vehicle-mounted VA coil 21 with rectification and filtering components, and charging control power electronics 22 for regulation, safety, and/or shutdown when required, and a communications link 23 to the infrastructure side; and
(3) a secondary energy storage system 31, battery management system components 32, and associated modules for in-vehicle communications (e.g., CAN and LIN) required for a battery state of charge (SOC), a charge rate, and other necessary information.

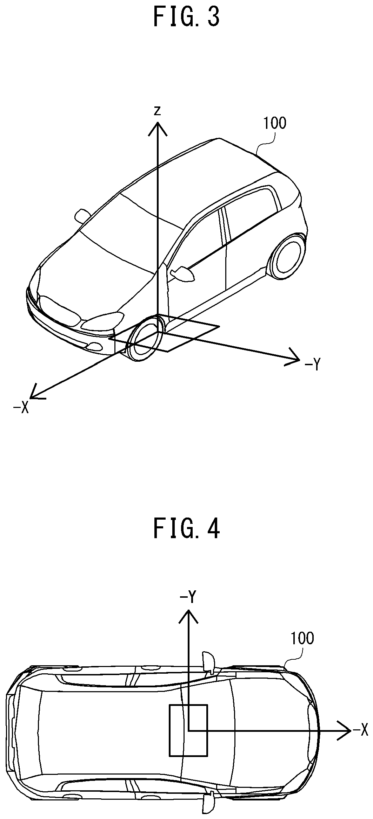

FIGS. 3 and 4 illustrate a Cartesian coordinate system compatible with a definition in the SAE J2954 standard and applicable to an embodiment of the present disclosure.

As shown in FIGS. 3 and 4, in the right-handed Cartesian coordinate system, +X axis may be set to point to the rear of the vehicle, and -X axis may be set to point to the front of the vehicle. +Y axis may be set to point to the right of the vehicle, i.e. to a passenger side of a left-hand drive car, and -Y axis may be set to point to the left of the vehicle in an exemplary embodiment. +Z axis may be set to point to the upward direction, and -Z axis may be set to point to the downward direction in an exemplary embodiment.

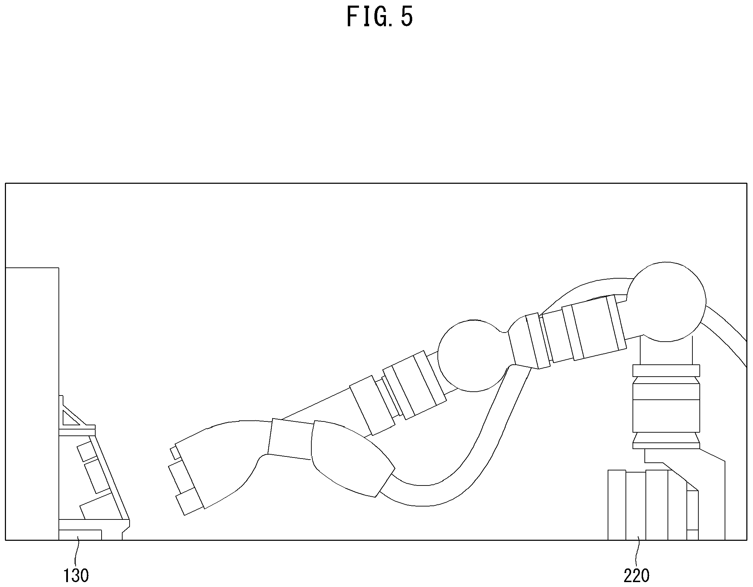

FIG. 5 illustrates an automatic charging system for sidearm connection interface (ACD-S) applicable to an exemplary embodiment of the present disclosure. The types of an autoconnect charging device or automatic charging device (ACD) may be categorized into an automatic charging system for underbody connection (ACD-U) or an automatic charging system for sidearm connection (ACD-S).

An international standard ISO 15118-8 directed for wireless communication interface for electric vehicle charging enables an EV to connect to a charger access point (AP) rather than a general AP through a signaling in Vendor Specific Element (VSE) field of a medium access control (MAC) frame corresponding to a layer 2 of OSI 7 layers. However, information on positioning and pairing is not defined in detail in the VSE field of a charger or SECC except for the wireless power transfer (WPT), and thus the vehicle may not obtain sufficient information required for an appropriate positioning and pairing from the VSE field of the charger in a robot charging system based on the automatic charging system for sidearm connection (ACD-S) shown in FIG. 5.

In such a case, pairing and positioning devices (PPDs) configured to perform the positioning and pairing between the vehicle and the charger may perform the WLAN association procedure continuously and repeatedly until a matched counterpart is found, which may be much inefficient.

In addition, when the VSE field of WLAN does not contain some detailed information such as maximum charging power provided by either the EVSE or EV, the EV to be charged may not be connected properly to an adequate charger in the charging station equipped with one SECC and the multiple EVSEs.

Meanwhile, after the EV is associated with the charger or SECC through the WLAN, a positioning procedure must be performed to ensure a precise alignment between the EV and the EVSE. In case of the wireless power transfer, if the vehicle-side pad is not accurately aligned with the EVSE-side pad, a charging efficiency may decrease or the charging may become impossible. In addition, when the positioning is completed, a procedure is required to check whether the EV may be physically connected to the EVSE. Since the charging cannot proceed if the EV cannot be physically connected to the EVSE to be connected, a pairing should be performed between the EV and the EVSE after the WLAN association. Accordingly, an International standard IEC 61950-2 prescribes procedures for the positioning and the pairing using point-to-point signals (P2PS) for the wireless power transfer. However, any method or procedures for the positioning and the pairing for the automatic connection device (ACD)-based robot charging system shown in Figure 5 is not prescribed in any International or industrial standard.

The present disclosure provides procedures for accurate positioning, aligning, pairing and mating of a charging manipulator 220 for charging the EV 100 with a charging door or charging port 130 of the EV 100. In addition, the present disclosure proposes procedures for the charging manipulator 220 and the charging door or charging port 130 to identify each other's types, and/or a procedure for selecting an EVSE suitable for charging the charging door or the charging port 130 of the EV 100.

In case that the power P_{src} supplied from the power grid during the charging process for the electric vehicle 100 is AC power, the EVSE or the charging manipulator may include an AC-to-DC converter for converting the power into DC power and a low frequency (LF) converter for converting the DC power into another AC power of an operation frequency suitable for the wireless power transfer. The operation frequency may be determined to be in a range 80-90 kilohertz (kHz), for example, but is not limited thereto.

The power transfer may be performed from the transmission coil or primary coil L1 to the receiving coil or secondary coil L2. Resonance frequencies of the transmission coil L1 and the receiving coil L2 may be configured to have similar or identical values, and the receiving coil L2 may be positioned close to the transmission coil L1 so that the receiving coil L2 may be located in an electromagnetic field generated by the transmission coil L1.

Since a power loss may increase as the transmission coil L1 and the receiving coil L2 are spaced further apart, setting relative positions of the transmission coil L1 and the receiving coil L2 may be an important factor.

The transmission coil L1 may be included in the power transfer device or transmission pad 210 shown in FIG. 1, and the receiving coil L2 may be included in the power receiving device or receiving pad 110 shown in FIG. 1. In addition, the transmission coil may be referred to as the primary coil or the ground assembly (GA) coil, and the receiving coil may be referred to as the secondary coil or the vehicle assembly (VA) coil. Therefore, the determination of the relative positions of the power transfer device or transmission pad 210 and the power receiving device or receiving pad 110 or the determination of the relative positions of the EV 100 and the power transfer device or transmission pad 210 may also be an important factor.

The positional alignment between the power transfer device or transmission pad 210 and the power receiving device or receiving pad 110 equipped in the EV 100 in FIG. 1 may correspond to the term 'alignment' described above, and thus may be defined as a positional alignment between the SPC or GA and the EVPC or VA and is not limited to the positional alignment between the power transfer device or transmission pad 210 and the power receiving device or receiving pad 110.

As mentioned above, the x-axis may denote the front-back direction of the vehicle, the y-axis may denote the left-right direction of the vehicle, and the z-axis may denote the up-and-down direction of the vehicle as shown in FIGS. 3 and 4.

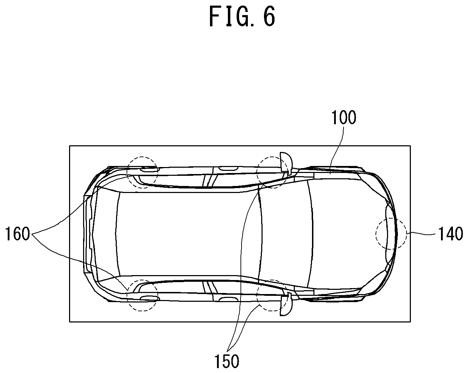

FIG. 6 illustrates positions where the charging port may be formed in the EV 100 according to an exemplary embodiment of the present disclosure.

As shown in FIG. 6, the charging port may be formed at a front bumper 140, a front fender panel 150, or a rear fender panel 160, for example, in the EV 100.

Although it is not shown in detail in FIG. 6, the charging port may be is classified into a vehicle internal switch type in which a switch for opening or closing the charging door or charging port is located inside the vehicle, a vehicle external switch type in which the switch for opening or closing the charging door or charging port is located outside the vehicle, and a push door type in which the charging door may be opened or closed from the outside of the vehicle according to a pressure exerted thereon.

According to the indoor switch type, the switch for opening or closing the charging door or charging port is disposed near a driver's seat inside the vehicle, so that a driver or a passenger may manipulate the switch to open or close the charging door or charging port. According to the outdoor switch type, the switch for mechanically opening or closing the charging door or charging port is disposed outside of the vehicle, i.e., near the charging door or charging port. Alternatively, however, the external switch may be manually operated or may be disposed to be spaced apart from the charging door or charging port by a predetermined distance.

The push door type may be a modified version of the outdoor switch type, and a push switch may be disposed inside the charging door or charging port. The push switch may operate manually or may be manipulated mechanically.

According to an exemplary embodiment, a separate inlet cover for protecting the inlet which is a charging socket placed in the vehicle may be provided additionally. If the inlet cover is provided inside the charging door, the inlet cover may be made of insulating plastic or rubber material.

In order for the ACD-S type charging manipulator 220 shown in FIG. 5 to open and close the charging door or charging port, it is necessary to identify the type of the charging door/port or a type of the inlet cover. For example, in case where the charging door or charging port is opened and closed by the internal switch inside the vehicle, the charging manipulator 220 cannot open the charging door or charging port from the outside and the charging door or charging port may be opened by a switch operation of the driver or the passenger. In such a case, the charging manipulator 220 may send the electric vehicle 100 a message, through wired or wireless communications, to notify that the charging manipulator 220 is close to the charging door or charging port for the charging and request the user inside the vehicle to open the charging door or charging port.

For example, in case where the charging door/port is opened and closed by the external switch outside the vehicle, the charging manipulator 220 may open and close the charging door/port when a certain condition is met. The charging manipulator 220 may have a size and shape suitable for operating the external switch and can exert an adequate force on the external switch through a precise manipulation, so that the charging manipulator 220 can open the charging door/port from the outside of the vehicle. The charging manipulator 220 may further include a separate effector for opening and closing the external switch in addition to the charging port. The effector may be designed to be small enough to operate the external switch while affecting no other mechanism.

In case of the push door type, the charging door/port may be opened and closed from the outside of the vehicle when an adequate force is exerted on the charging door.

In case where the inlet cover is provided along with a cover switch for opening and closing the inlet cover, the charging manipulator 220 may open or close the inlet cover while affecting no other mechanism by exerting an adequate pressure on the cover switch which is small enough to push the external switch.

In case where the cover switch is not provided for the inlet cover, the charging manipulator 220 may open or close the inlet cover when the charging manipulator 220 is provided with a structure for opening and closing the inlet cover, e.g., a clamp structure or a structure that can exchange clamp type.

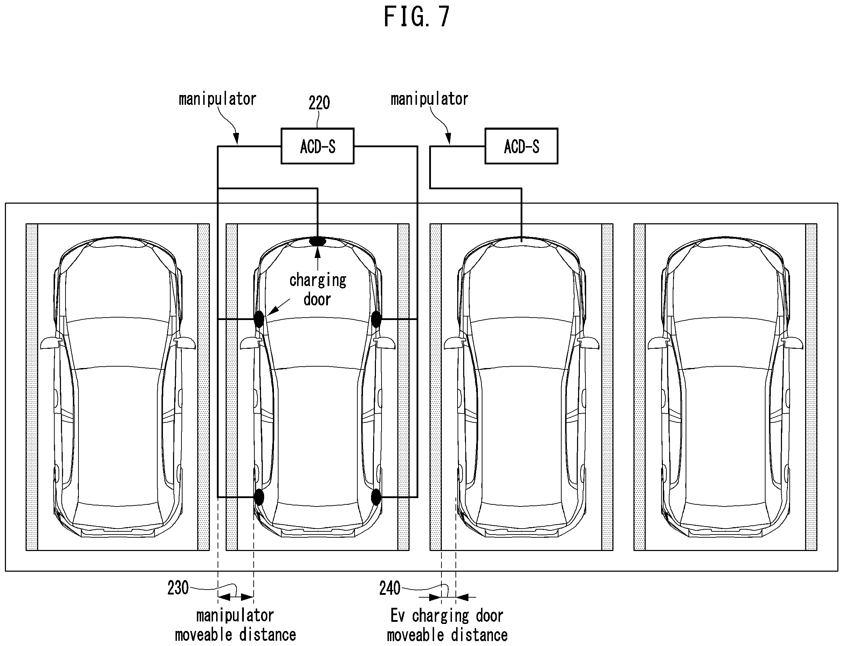

FIG. 7 illustrates an example of a non-parallel type parking space for explaining a preparation of an electric vehicle charging according to an exemplary embodiment of the present disclosure.

In some embodiments, it may be required that the positioning of the manipulator should take precedence over opening the EV charging door/port.

In a private parking area, there may be no problem in securing a movable space for the ACD-S type charging manipulator 220. In a public parking area, however, it may be troublesome to secure a suitable location for the charging manipulator 220.

For example, as summarized in the standard SAE J2954, each country has its own regulation regarding a parking area, and accordingly a minimum size of a parking lot varies from country to country.

For example, in Korea, the minimum size of the parking lot in a parallel type parking space has a width of 2.0 meters (m) and a length of 6.0 m, and a minimum spacing between individual parking lots is regulated to be 0.15 m. The minimum size of the parking lot in the non-parallel type parking space has a width of 2.3 m and a length of 5.0 m, and the minimum spacing between individual parking lots is regulated to be 0.15 m.

In addition to the differences in the minimum size of the parking lot and the minimum spacing between individual parking lots, the size of the vehicle varies for each vehicle product. Therefore, the charging manipulator 220 should be positioned in an appropriate location before the charging of the electric vehicle 100 is initiated, which is necessary also to prevent an unwanted accident such as a collision of the charging manipulator 220 in motion with the electric vehicle 100 with its charging door or charging port open. It may be required to determine the position of the charging manipulator 220 taking into account an installed position of the charging door relative to the electric vehicle or charging port and an opening direction of the charging door or charging port.

As shown in FIG. 7, the position of the charging manipulator 220 to be used for charging the electric vehicle 100 may be determined based on at least one of: the position of the charging door relative to the electric vehicle or charging port of the electric vehicle 100, whether or not the charging manipulator 220 can move between the electric vehicles 100, a width of a movable space 230 of the charging manipulator 220 between the vehicles, and/or a movable range 240 of the charging door of the electric vehicle 100.

Additionally, the position of the charging manipulator 220 may be determined to be spaced apart sufficiently from the vehicle by taking into account an extension of the charging door of the electric vehicle when the charging door is opened for the charging.

The process of determining the position of the charging manipulator 220 for charging the electric vehicle 100 may be performed under the assumption of several cases as follows.

Assuming of the non-parallel parking as shown in FIG. 7 and that the charging door is positioned at the front bumper, a parking direction of the electric vehicle 100 should be taken into consideration additionally. If an obstacle or wall is located in front of the electric vehicle 100, the positioning of the charging manipulator 220 to be close to the charging door or charging port may be troublesome because of the obstacle or the wall.

Assuming of the non-parallel parking as shown in FIG. 7 and that the charging door is positioned at the front fender or the rear fender of the vehicle, an obstacle, wall, or another vehicle located in front of the charging door of the electric vehicle 100 may be troublesome to a movement of the charging manipulator 220 toward the charging door or charging port. It may be necessary to move the charging manipulator 220 toward the front of the charging door after determining whether the distance obtained by subtracting the movable range 240 of the charging door of the electric vehicle 100 from the width of the movable space 230 of the charging manipulator 220 between the vehicles is greater than a certain threshold. A minimum distance that an arm of the charging manipulator 220 can move may be defined under the assumptions that an adjacent vehicle on a left or right side of the vehicle to be charged are not parked crookedly and that the adjacent vehicle is parked side-to-side with the vehicle to be charged but not in an opposite direction. For example, if a width of the arm of the charging manipulator 220 is less than 2 centimeters (cm), the minimum distance that an arm of the charging manipulator 220 can move may be defined as 2 cm.

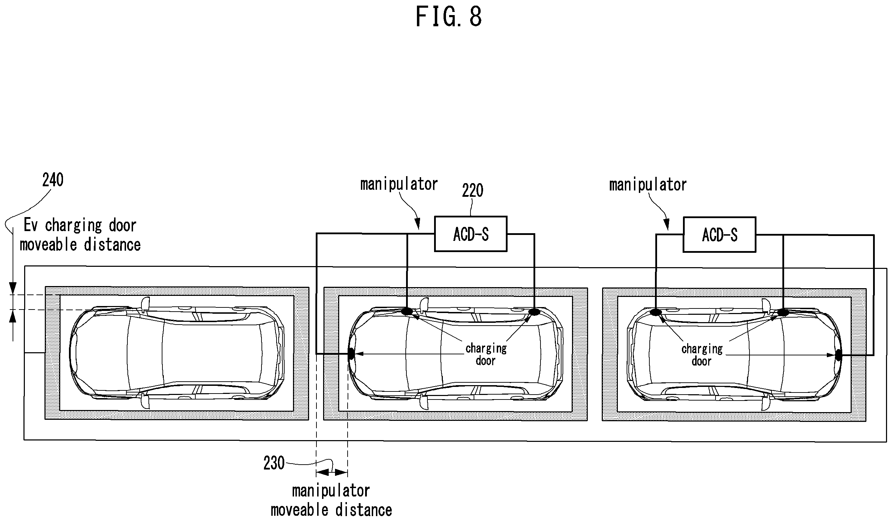

FIG. 8 illustrates an example of parallel type parking spaces for explaining a preparation of an electric vehicle charging according to an exemplary embodiment of the present disclosure.

As mentioned above, each country has its own regulation regarding the parking area, and the minimum size of a parking lot varies from country to country.

For example, the minimum spacing between individual parking lots in the parallel type parking space is regulated to be 50 cm in Korea, but the spacing may be 0 cm in France.

If the charging manipulator 220 is moved between the vehicles in a state that the charging door of the electric vehicle 100 is open, the space will become more cramped. Accordingly, it is desirable that the size of the each parking lot of the parking space is determined in consideration of such a case. However, in case where the sufficient space is not provided, a path of the charging manipulator 220 needs to be calculated such that the charging manipulator 220 approaches the charging door in consideration whether the charging door of the vehicle to be charged or the adjacent vehicle is open or not.

In the embodiment of FIG. 8 also, the charging manipulator 220 should be positioned in an appropriate location before the charging of the electric vehicle 100 is initiated, which is necessary also to prevent an unwanted accident such as a collision of the charging manipulator 220 in motion with the electric vehicle 100 with its charging door or charging port open. It may be required to determine the position of the charging manipulator 220 taking into account the installed position of the charging door relative to the electric vehicle or charging port and the direction in which the charging door or charging port is opened.

As shown in FIG. 8, the position of the charging manipulator 220 to be used for charging the electric vehicle 100 may be determined based on at least one of: the position of the charging door relative to the electric vehicle or charging port of the electric vehicle 100, whether or not the charging manipulator 220 can move between the electric vehicles 100, the width of the movable space 230 of the charging manipulator 220 between the vehicles, and/or the movable range 240 of the charging door of the electric vehicle 100.

Additionally, the position of the charging manipulator 220 may be determined to be spaced apart sufficiently from the vehicle by taking into account the extension of the charging door of the electric vehicle when the charging door is opened for the charging.

The process of determining the position of the charging manipulator 220 for charging the electric vehicle 100 may be performed under the assumption of several cases as follows.

Assuming of the parallel parking as shown in FIG. 8 and that the charging door is positioned at the front fender or the rear fender, the parking direction of the electric vehicle 100 should be taken into consideration additionally. If an obstacle or wall is located in front of the charging door of the electric vehicle 100, the positioning of the charging manipulator 220 to be close to the charging door may be troublesome because of the obstacle or the wall.

Assuming of the parallel parking as shown in FIG. 8 and that the charging door is positioned at the front bumper of the vehicle, an obstacle, wall, or another vehicle located in front of the charging door of the electric vehicle 100 may be troublesome to the movement of the charging manipulator 220 toward the charging door or charging port. It may be necessary to move the charging manipulator 220 toward the front of the charging door after determining whether the distance obtained by subtracting the movable range 240 of the charging door of the electric vehicle 100 from the width of the movable space 230 of the charging manipulator 220 between the vehicles is greater than a certain threshold.

In order to facilitate the charging of the electric vehicles, it may be ideal to establish a unified standard for the size of electric vehicles, the size of the individual parking lots, the spacing between the parking lots, the size of the charging doors, and so on, which is much difficult in reality.

A movement of the ACD-S type charging manipulator 220 between the vehicles or close to the vehicle in a state that the charging door of the vehicle is open poses a risk of damaging the charging door.

Therefore, it may be required to move the charging manipulator 220 to be located near the charging door of the vehicle and then allow the charging door of the vehicle to be opened after the charging manipulator 220 is stopped to ensure the safety of the devices.

During its motion, the charging manipulator 220 may be required to monitor any nearby movements of a passersby around the vehicle, and/or a driver or a passenger getting off the vehicle, and so on to move while taking their safety into account. For example, while the charging manipulator 220 is moving in front of a door of the vehicle, it may be necessary for the charging manipulator 220 to consider all the gestures or actions such as opening of the door to get off the vehicle, getting off the vehicle of the driver or the passenger, and any other movements after getting off the vehicle, for the safety. The moving path of the charging manipulator 220 needs to be calculated or determined in consideration of a plurality of safety-related factors as described above.

It may be difficult to implement a communication standard that fully takes into account the movements of ordinary nearby passers-by, but at least some consideration of these cases is necessary in standards related with the charging of the electric vehicles. Examples of such standards may include ISO 5474-5.

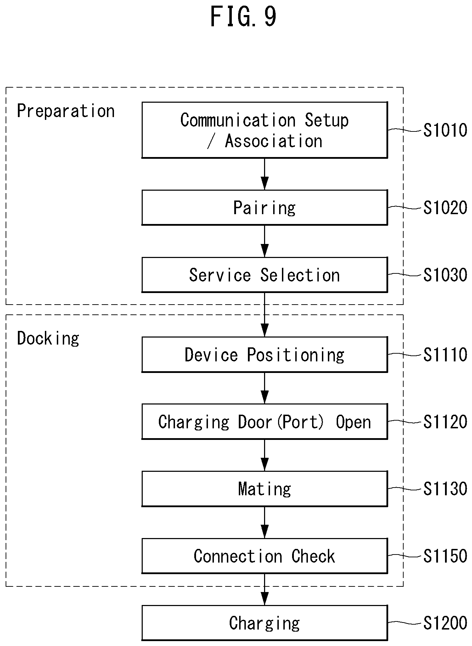

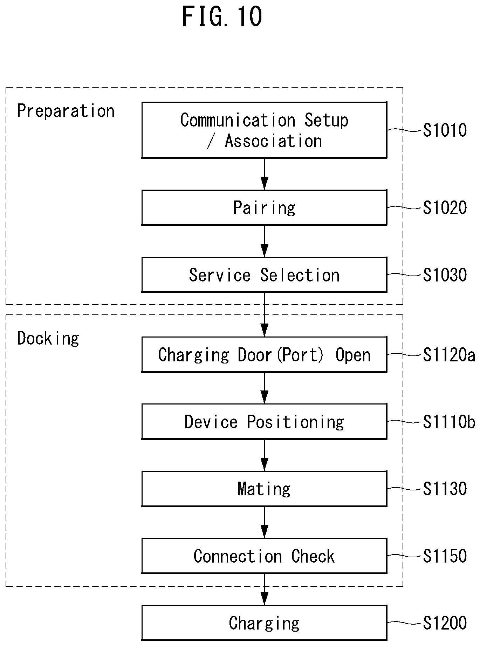

FIGS. 9 and 10 are flowcharts illustrating exemplary methods of controlling an opening and closing of the charging port performed by the charging manipulator or charging system according to an exemplary embodiment of the present disclosure.

In order for the ACD-S type charging manipulator 220 to fully and automatically open and close the charging door or charging port and the inlet of the vehicle, several prerequisites must be considered.

In case where the electric vehicle 100 provides a function of automatically opening the charging door and the inlet after the parking of the vehicle, the charging manipulator 220 need not directly open the charging door and the inlet and may request the electric vehicle 100 to open the charging door and the inlet.

The electric vehicle 100 may detect whether the charging door and the inlet are open using a separate sensor. The charging manipulator 220 may detect whether the charging door and the inlet are open using an image sensor, for example. The charging manipulator 220 and the electric vehicle 100 may check whether their information on the opening and closing of the charging door and the inlet matches the other party's information.

After the charging of the electric vehicle 100 is completed or terminated, the charging manipulator 220 may determine to close the charging door and the inlet depending on whether the electric vehicle 100 has the function of automatically closing the charging door and the inlet or not.

Providing the inlet cover in addition to the charging door may reduce manufacturing costs of the charging port but may make the charging process complicated. Conversely, an integration of the inlet with the charging door may increase the manufacturing costs of the charging port but may simplify the charging process. Therefore, it is necessary for the charging manipulator 220 to proceed with a preparation for charging, a charging process, and a post-process after identifying whether the charging door and the inlet are separately provided or integrated with each other.

Even when the electric vehicle 100 provides the function of opening and closing the charging door and the inlet, the electric vehicle 100 may either automatically open and close the charging door and the inlet under the control of an internal controller, or open and close the charging door and the inlet in response to a command from a user (i.e., driver or passenger). The role of the internal controller of the electric vehicle 100 may be different in the two cases. Therefore, in some of the various embodiments of the present disclosure, a process may be required for the sensor of the electric vehicle 100 and the sensor of the charging manipulator 220 to identify the opening or closed state of the charging door and/or the inlet.

In case where the electric vehicle 100 does not provide the function of automatically opening the charging door and the inlet, the charging manipulator 220 may be required to have a function of opening the charging door/port and/or the inlet before the charging, and closing the charging door/port and/or the inlet after the completion of the charging.

In an alternative embodiment of the present disclosure, the electric vehicle 100 and the charging manipulator 220 may partially or complementarily provide the function of opening and closing of the door/port and/or the inlet. For example, the electric vehicle 100 may provide the function of opening the charging door/port and/or the inlet while the charging manipulator 220 may provide the function of closing the charging door/port and/or the inlet.

In case that the charging manipulator 220 provides the function of opening or closing the charging door/port and/or the inlet, it may be desirable that the charging manipulator 220 is controlled to exert an adequate or appropriate pressure on the vehicle so as to prevent a damage to the vehicle.

Referring to FIGS. 9 and 10, preparatory and docking processes may be required before the charging (S1200) of the electric vehicle 100 is initiated.

The preparatory process may include a communication setup and association operation (S1010) between the electric vehicle 100 and the charging system or the charging manipulator 220, a pairing operation (S1020), and a service selection operation (S1030).

The docking process performed after a completion of the preparatory process may include a device positioning operation (S 1110) between the electric vehicle 100 and the charging system or the charging manipulator 220, a charging door/port opening operation (S1120), a mating operation (S1130), and a connection check operation (S 1 150). The mating operation (S 1130) may refer to a mechanical coupling between the charging effector of the charging manipulator 220 and the inlet of the charging port. The connection check operation (S 1150) may refer to a checking for electrical or mechanical connections.

Although it may be preferable that the device positioning operation (S 1110) is completed before the charging door/port opening operation (S 1120) in consideration of the safety as mentioned above, there may be cases where the charging door/port is opened first (S1120a) and then the device positioning operation (S1110b) is completed as shown in FIG. 10 in consideration of the type of charging door/port, the type of the charging manipulator 220, or a surrounding environment of the vehicle. Therefore, it may be required to stipulate a procedure for the case of FIG. 9 as well as the procedure for the case of FIG. 10 in a relevant standard.

For example, the preparation of charging and the docking processes may be accomplished according to the procedure shown in FIG. 9 in an environment where a sufficient communication support is provided while the preparation of charging and the docking processes may be accomplished according to the procedure as shown in FIG. 10 in an environment where the communication support is insufficient.

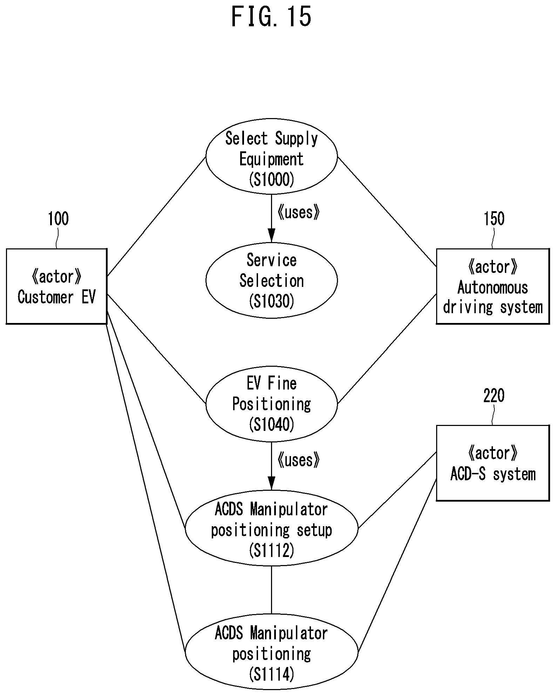

The exemplary procedures of FIGS. 9 and 10 may further include an operation of selecting the EVSE before the preparatory process, which is not shown in FIGS. 9 and 10 but will be described below with reference to FIG. 15.

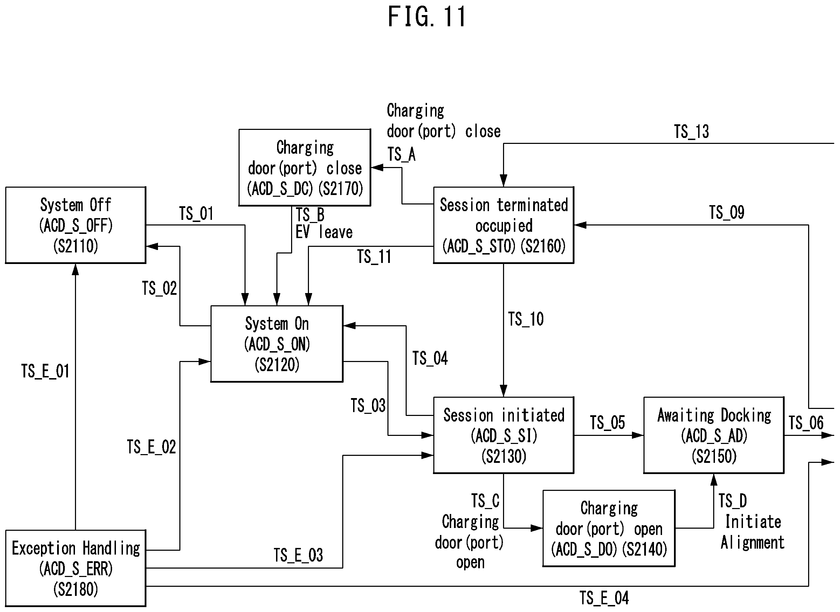

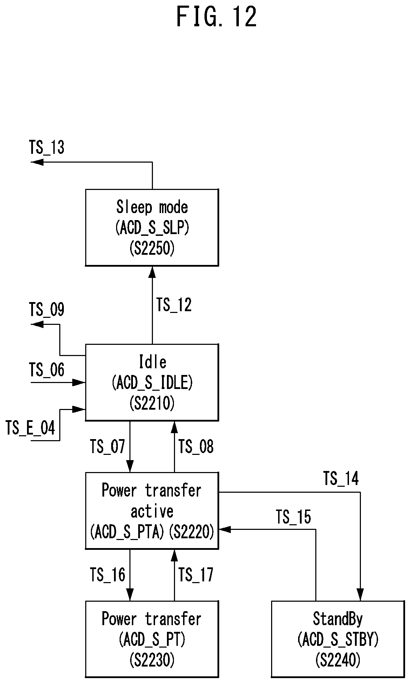

FIGS. 11 and 12 are state diagrams illustrating an exemplary method of controlling the opening and closing of the charging port performed by the charging manipulator or charging system according to an exemplary embodiment of the present disclosure.

Some of states and transitions shown in FIGS. 11 and 12 may be based on an IEC-TC69-WG14_N040 document, for example, but at least some of the states and the transitions shown in FIGS. 11 and 12 may not be specified in any standard document.

Some portion of the protocol shown in FIGS. 11 and 12 may be provided correspondingly to the charging preparation and the charging processes in case where the communication support is not provided while the other portion of the protocol shown in FIGS. 11 and 12 may be provided correspondingly to the charging preparation and the charging processes in case where the communication support is provided.

The charging manipulator 220 or a system of the EVSE side may change its state from a System OFF (ACD_S_OFF) state S2110 to a System ON (ACD_S_ON) state S2120 based on a protocol or operation according to a standard TS_01. The state of the system may be changed from the System ON state S2120 to the System OFF state S2110 based on a protocol or operation according to a standard TS_02.

The state of the system may be changed from the System ON state S2120 to a Session initiated (ACD_S_SI) state S2130 based on a protocol or operation according to a standard TS_03. The state of the system may be changed from the Session initiated state S2130 to the System ON state S2120 based on a protocol or operation according to a standard TS_04.

The state of the system may be changed from the Session initiated state S2130 to a Charging door (port) open (ACD_S_DO) state S2140 based on a protocol or operation according to a standard TS_C. The protocol or operation according to the standard TS_C may be sending or receiving a command or request to open the charging door (port).

The state of the system may be changed from the Charging door (port) open state S2140 to an Awaiting docking (ACD_S_AD) state S2150 based on a protocol or operation according to a standard TS_D. The protocol or operation according to the standard TS_D may be sending or receiving a command or request to initiate a more precise alignment between the charging manipulator 220 and the charging inlet.

In case where the communication support to enable the protocol or operation according to standards TS_C and/or TS_D is not provided or the capability of the automatic or semiautomatic opening/closing of the charging door is not provided, the state of the system may be changed from the Session initiated state S2130 to the Awaiting docking state S2150 based on a protocol or operation according to standard TS_05.

The state of the system may be changed from the Awaiting docking state S2150 to an Idle (ACD_S_IDLE) state S2210 based on a protocol or operation according to standard TS_06. The state of the system may be changed from the idle state S2210 to a Power transfer active (ACD_S_PTA) state S2220 based on a protocol or operation according to standard TS_07. The state of the system may be changed from the Power transfer active state S2220 to a Power transfer (ACD_S_PT) state S2230 based on a protocol or operation according to standard TS_16. The protocol or operation according to standard TS_16 may be an exchange of a command or request to transfer power after a check is made that the device positioning operation (S1110), the mating operation (S1130), and the connection check operation (S1150) were completed without any problems.

The state of the system may be changed from the Power transfer state S2230 to the Power transfer active state S2220 based on a protocol or operation according to standard TS_17. The protocol or operation according to standard TS_17 may be sending or receiving a command and/or request to stop the power transfer after a check is made that the charging operation S1200 has been completed or terminated. Alternatively, the protocol or operation according to standard TS_17 may be sending or receiving a command and/or request to stop the power transfer due to an interrupt request generated during the charging operation S 1200.

The state of the system may be changed from the Power transfer active state S2220 to a StandBy (ACD_S_STBY) state S2240 based on a protocol or operation according to standard TS_14. The state of the system may return from the StandBy state S2240 to the Power transfer active state S2220 based on a protocol or operation according to standard TS_15. The protocol or operation according to standard TS_14 may include sending or receiving a command and/or request to wait when the protocol or operation according to standard TS_16 does not occur in the Power transfer active state S2220. The protocol or operation according to standard TS_15 may include sending or receiving a command and/or request to test an occurrence of the protocol or operation according to standard TS_16 periodically or aperiodically in the StandBy state S2240.

The state of the system may return from the Power transfer active state S2220 to the Idle state S2210 based on a protocol or operation according to standard TS_08. The protocol or operation according to standard TS_08 may include sending or receiving a command and/or request to return to the Idle state S2210 when the power transfer is completed or when the power transfer failed.

The state of the system may be changed from the Idle state S2210 to a Session terminated occupied (ACD_S_STO) state S2160 based on a protocol or operation according to standard TS_09. The state of the system may be changed from the Session terminated occupied state S2160 to a Charging door (port) close (ACD_S_DC) state S2170 based on a protocol or operation according to standard TS_A. The protocol or operation according to standard TS_A may be sending or receiving a command and/or request to close the charging door (port).

The state of the system may be changed from the Charging door (port) close state S2170 to the system ON state S2120 based on a protocol or operation according to standard TS_B. The protocol or operation according to standard TS_B may be sending or receiving information related with leaving of the electric vehicle 100 to from the EVSE, a command and/or request related with the information.

The state of the system may be changed from the Session terminated occupied state S2160 to the system ON state S2120 based on a protocol or operation according to standard TS_11. Additionally or alternatively, the state of the system may be changed from the Session terminated occupied state S2160 to the Session initiated state S2130 based on a protocol or operation according to standard TS_10.

The state of the system may be changed from the Idle state S2210 to a Sleep mode (ACD_S_SLP) state S2250 based on a protocol or operation according to standard TS_12. The state of the system may be changed from the Sleep mode state S2250 to the Session terminated occupied state S2160 based on a protocol or operation according to standard TS_13.

When an error occurs or a command and/or request related with an exception handling is sent or received during the charging process, the state of the system may be changed to an Exception handling (ACD_S_ERR) state S2180. The state of the system may be changed from the Exception handling state S2180 to the system OFF state S2110 based on a protocol or operation according to standard TS_E_01. The state of the system may be changed from the Exception handling state S2180 to the system ON state S2120 based on a protocol or operation according to standard TS_E_02. The state of the system may be changed from the Exception handling state S2180 to the Session initiated state S2130 based on a protocol or operation according to standard TS_E_03. The state of the system may be changed from the Exception handling state S2180 to the Idle state S2210 based on a protocol or operation according to standard TS_E_04.

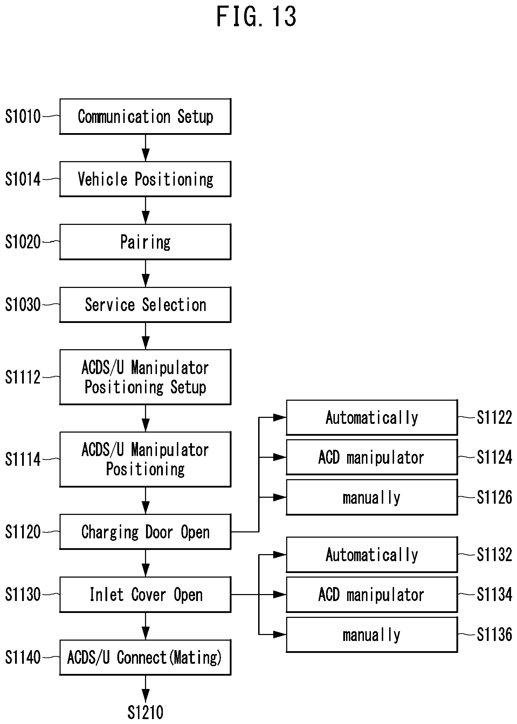

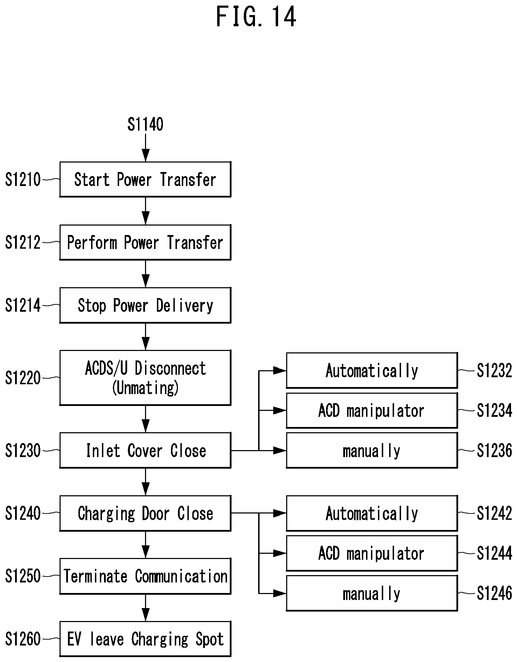

FIGS. 13 and 14 are flowcharts illustrating an example of a method of controlling opening and closing of a charging port performed by the charging manipulator 220 or the charging system 210 according to an embodiment of the present disclosure.

As shown in FIGS. 13 and 14, a communication setup operation S1010 may be performed between the charging manipulator 220 or the charging system 210 and the electric vehicle 100. After the communication setup operation S1010, a vehicle positioning operation S1014 may be performed. Meanwhile, the vehicle positioning operation S1014 may be preceded by an operation of selecting the charging manipulator 220 or the charging system 210 by the electric vehicle 100. According to an exemplary embodiment of the present disclosure, in case where one of a plurality of charging systems is to be selected, the selection operation may be performed before the communication setup operation S1010 so that the communication setup operation S1010 may be performed for a selected charging system 210. According to another embodiment of the present disclosure, in case where a plurality of manipulators are connected to a charging system 210 and one of the plurality of manipulators is to be selected, one of the charging manipulators may be selected after the communication setup operation S1010 so that the vehicle may be positioned in the operation S1010 to a chargeable position from a selected charging manipulator 220. According to yet another embodiment, the charging system 210 and/or the charging manipulator 220 may be selected before the communication setup operation S1010.

After the vehicle positioning operation S1014, a pairing operation S1020 between the charging manipulator 220 or the charging system 210 and the electric vehicle 100 may be performed. After the pairing operation S 1020, a service selection operation S1030 may be performed. Additionally or alternatively, a process of selecting the charging manipulator 220 may be performed after the pairing operation S1020 or the service selection operation S1030.

After the service selection operation S1030, an operation to set up positioning of the charging manipulator 220 may be performed (S1112). The operation S1112 may be performed according to the type of the charging manipulator 220 such as ACD-S or ACD-U. After the charging manipulator positioning setup operation S 1 12, an operation of positioning the charging manipulator 220 may be performed (S1114). The positioning operation S1114 form the charging manipulator 220 may be a process of moving the charging manipulator 220 to be positioned very close to the charging door or charging port of the vehicle.

After the positioning operation S1114, a charging door opening operation S1120 may be performed. Depending on a subject performing the opening operation, the charging door opening operation S1120 may be performed by one of three operations: automatically opening the charging door by the electric vehicle 100 (S1122), opening the charging door by the charging manipulator 220 (S1124), and opening the charging door manually by a user or a third party (S1126).

After the charging door opening operation S1120, an inlet cover opening operation S1130 may be performed. Depending on a subject performing the opening operation, the inlet cover opening operation S1130 may be performed by one of three operations: automatically opening the inlet cover by the electric vehicle 100 (S1132), opening the inlet cover by the charging manipulator 220 (S1134), and opening the inlet cover manually by the user or the third party (S1136).

In case where the inlet cover is formed integrated with the charging door as mentioned above, the inlet cover opening operation S1130 may be merged with the charging door opening operation S1120 or may be omitted.

A mating operation S1140 may be performed after the charging door opening operation S1120 and/or the inlet cover opening operation S1130. The mating operation S1140 may be understood as a process in which the charging manipulator 220 is coupled to and connected to the charging inlet of the vehicle.

After the mating operation S1140, if it is checked that there is no problem with the electrical and mechanical connection between the charging manipulator 220 and the charging inlet of the vehicle, a start power transfer operation S1210 may be performed.

After the start power transfer operation S1210, a perform power transfer operation S1212 may be carried out. When the battery of the electric vehicle 100 is sufficiently charged in response to a request for power transfer, a stop power delivery operation S1214 may be performed.

After the stop power transfer operation S1214, a disconnect/unmating operation S1220 for releasing the charging manipulator 220 may be performed.

After the disconnect/unmating operation S1220, an inlet cover closing operation S1230 and/or a charging door closing operation S1240 may be performed.

Depending on a subject performing the closing operation, the inlet cover closing operation S1230 may be performed by one of three operations: automatically closing the inlet cover by the electric vehicle 100 (S1232), closing the inlet cover by the charging manipulator 220 (S1234), and closing the inlet cover manually by the user or the third party (S1236).

Also, depending on a subject performing the closing operation, the charging door closing operation S 1240 may be performed by one of three operations: automatically closing the charging door by the electric vehicle 100 (S1242), closing the charging door by the charging manipulator 220 (S1244), and closing the charging door manually by the user or the third party (S1246).

In case where the inlet cover is formed integrated with the charging door as mentioned above, the charging door closing operation S 1240 may be merged with the inlet cover closing operation S1230 or may be omitted.

After the charging door closing operation S1240, a communication termination operation S1250 may be performed. After the communication termination operation S1250, the electric vehicle 100 may leave the charging spot (S1260).

During the operations S 1 122, S 1132, S 1232, and S 1242 in which the charging door and/or the inlet cover is automatically opened or closed by the electric vehicle 100, information that the positioning of the charging manipulator 220 is completed or information that the charging manipulator 220 is unmated from the inlet, for example, may be shared between the electric vehicle 100 and the charging manipulator 220, and the commands or requests related with the automatic opening or closing of the charging door and/or the inlet cover may be shared between the electric vehicle 100 and the charging manipulator 220. Afterwards, the charging door and/or the inlet cover may be automatically opened or closed by a controller of the electric vehicle 100.

The charging manipulator 220 or the electric vehicle 100 may acquire information on an open or closed state of the charging door and/or the inlet cover using at least one sensor installed therein, so that a transmission of the command and/or request related with the opening or closing of the charging door and/or the inlet cover may be attempted again between the electric vehicle 100 and the charging manipulator 220 based on such information.

Also, during the operations S1126, S 1136, S1236, and S 1246 in which the charging door and/or the inlet cover is automatically opened or closed by the user or the third party, the information that the positioning of the charging manipulator 220 is completed or the information that the charging manipulator 220 is unmated from the inlet, for example, may be shared between the electric vehicle 100 and the charging manipulator 220, and the commands or requests related with the automatic opening or closing of the charging door and/or the inlet cover may be shared between the electric vehicle 100 and the charging manipulator 220. Afterwards, information that the charging door and/or the inlet cover can be opened or closed or a notice indicating that the charging door and/or the inlet cover is to be opened or closed may be provided to the user or the third party through an interface such as a display panel of the electric vehicle 100.

Based on the information on the open or closed state of the charging door and/or the inlet cover acquired by the at least one sensor, the charging manipulator 220 or the electric vehicle 100 may provide the user, the third party, or each other with notifications, guidance, or information on the status, or ability for the automatic opening or closing of the charging door and/or the inlet cover or requirement of manual opening or closing of the charging door and/or the inlet cover.

During the operations S1124, S1134, S1234, and S 1244 in which the charging door and/or the inlet cover is opened or closed by the charging manipulator 220, the information that the positioning of the charging manipulator 220 is completed or the information that the charging manipulator 220 is unmated from the inlet, for example, may be shared between the electric vehicle 100 and the charging manipulator 220, and the commands or requests related with the automatic opening or closing of the charging door and/or the inlet cover may be shared between the electric vehicle 100 and the charging manipulator 220. Afterwards, the charging door and/or the inlet cover may be automatically opened or closed by the charging manipulator 220.

Based on the information on the open or closed state of the charging door and/or the inlet cover acquired by the at least one sensor, the charging manipulator 220 or the electric vehicle 100 may share the commands or requests related with the opening or closing of the charging door and/or the inlet cover.

During the operations S1124, S1134, S1234, S1244 in which the charging door and/or the inlet cover is opened or closed by the charging manipulator 220, it may be required to control the charging manipulator 220 precisely so that the charging manipulator 220 applies an adequate force on the charging door, the inlet cover, or a relevant switch.

The subject carrying out the operations S1120, S1130, S1230, and S1240 of opening or closing the charging door and/or the inlet cover may be the same as each other or may be different from each other. Individual subjects carrying out the operations S1120, S1130, S1230, and S1240 of opening or closing the charging door and/or the inlet cover may be determined according to the types of the charging door and/or the inlet cover. Accordingly, the types of the charging door and/or the inlet cover may be identified before the initiation of the operations S1120, S1130, S1230, and S1240 of opening or closing the charging door and/or the inlet cover.

For example, according to an exemplary embodiment of the present disclosure, the charging door and/or the inlet cover may be automatically opened or closed by the electric vehicle 100 (S1122, S1132, S1232, S1242). According to another embodiment of the present disclosure, the charging door and/or the inlet cover may be opened or closed by the charging manipulator 220 (S1124, S1134, S1234, S1244).

According to yet another embodiment of the present disclosure, the charging door and/or the inlet cover may be automatically opened by the electric vehicle 100 (S1122, S1132) while being closed by the charging manipulator 220 (S1234, S1244).

FIGS. 15-17 illustrate a protocol for controlling the opening and closing of the charging port in the charging manipulator or the charging system according to an exemplary embodiment of the present disclosure.

As shown in FIG. 15, an operation S1000 of selecting an EVSE may be performed through communications between the electric vehicle 100 and an autonomous driving system 150. A service selection operation S1030 may be performed after the EVSE selection operation S1000. The service selection operation S1030 may be carried out based on a result of the EVSE selection operation S1000.

While performing the EVSE selection operation S1000, the electric vehicle 100 may receive information on a plurality of EVSEs and select an EVSE equipped with an appropriate charging manipulator on the basis of the movable range, an operable range, and functions (i.e. the capability of opening or closing the charging door and/or the inlet cover) of the charging manipulator related with each EVSE. The plurality of EVSEs in the charging station may broadcast information on the charging infrastructure periodically or aperiodically. The information on the charging infrastructure may include information about the location and function of the EVSE, the type of charger associated with the EVSE, the presence or absence of the charging manipulator, and the function, the movable range, and the operable range of the charging manipulator.

Alternatively, the plurality of EVSEs may broadcast their information only when at least one electric vehicle is detected in the vicinity or when electric vehicle is detected to enter a parking space equipped with the charging facility. In case that all of the chargers and the charging manipulators are occupied by another electric vehicles, the EVSE may not broadcast the information even if a new vehicle enters the parking space equipped with the charging facility. Instead, the EVSE may broadcast a notification that the chargers are currently occupied by another vehicles in such a case.

A fine positioning operation S1040 for the electric vehicle 100 may be performed between the electric vehicle 100 and the autonomous driving system 150. A positioning setup operation S1112 for the ACD-S type charging manipulator 220 may be performed between the electric vehicle 100 and the ACD-S system or the charging manipulator 220. The positioning setup operation S1112 for the ACD-S type charging manipulator 220 may be carried out based on a result of the fine positioning operation S1040 for the electric vehicle 100. After the positioning setup operation S1112 for the ACD-S type charging manipulator 220, a positioning operation S1114 for the ACD-S type charging manipulator 220 may be performed.

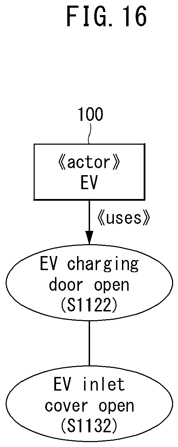

Referring to FIG. 16, in case where the electric vehicle 100 has the capability of opening and closing the charging door/port and/or the inlet cover, the electric vehicle 100 may open the charging door (S1122). Subsequently, the electric vehicle 100 may open the inlet cover (S1132).

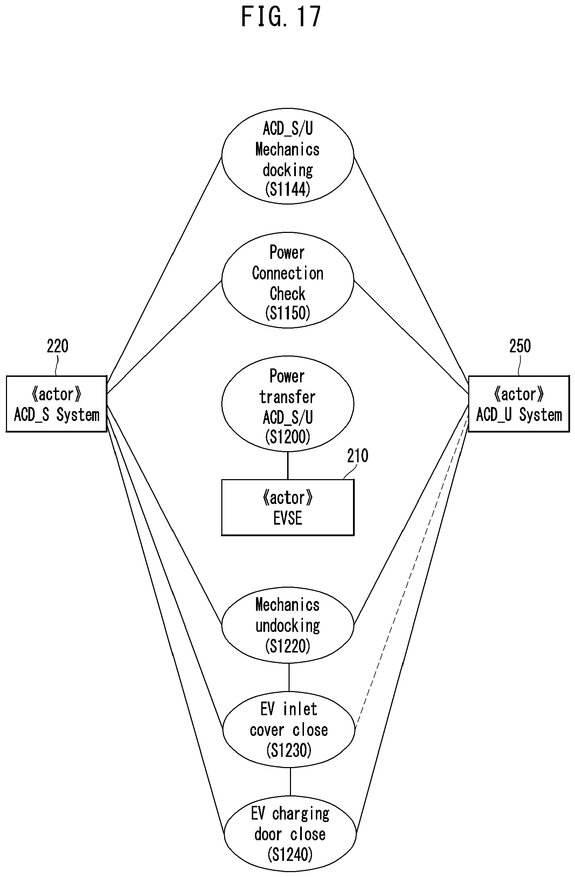

FIG. 17 illustrates a workflow assuming a case that the EVSE 210 includes the ACD-U system 250 in addition to the ACD-S system 220.

An ACD-S type or ACD-U type (hereinbelow, abbreviated by "ACD-S/-U") mechanical docking operation S1144 may be performed by at least one of the ACD-S system 220 and/or the ACD-U system 250.

A power connection check operation S1150 may be performed by at least one of the ACD-S system 220 and/or the ACD-U system 250.

After the power connection check operation S1150 is performed successfully, an ACD-S/-U power transfer operation S1200 may be performed by the EVSE 210. After the power transfer operation S1200 is completed or terminated, a mechanical undocking operation S1220 may be performed by at least one of the ACD-S system 220 and/or the ACD-U system 250. Subsequently, an inlet cover closing operation S1230 and a charging door closing operation S1240 may be performed.

Although the description of the exemplary embodiments presented above with reference to FIGS. 6-16 are focused on the ACD-S system, the power transfer preparation and the power transfer may be performed based on the ACD-U system as shown in FIG. 17 in another exemplary embodiment of the present disclosure.

Further, the ACD-S system or the ACD-U system may be just illustrative of an exemplary scheme compliant with currently known charging standards for the electric vehicles, and the embodiments of the present disclosure are not limited to the ACD-S system or ACD-U system. That is, the embodiments of the present disclosure may be related to various electric vehicle charging standards to perform the charging preparation process for the electric vehicles including the positioning, the opening of the charging door or charging port and/or the inlet cover, and the docking or mating, the actual charging process, and the post-processing process after the completion of the charging process including the unmating and undocking, the closing of the charging door or charging port and/or the inlet cover, the departure of the vehicle.

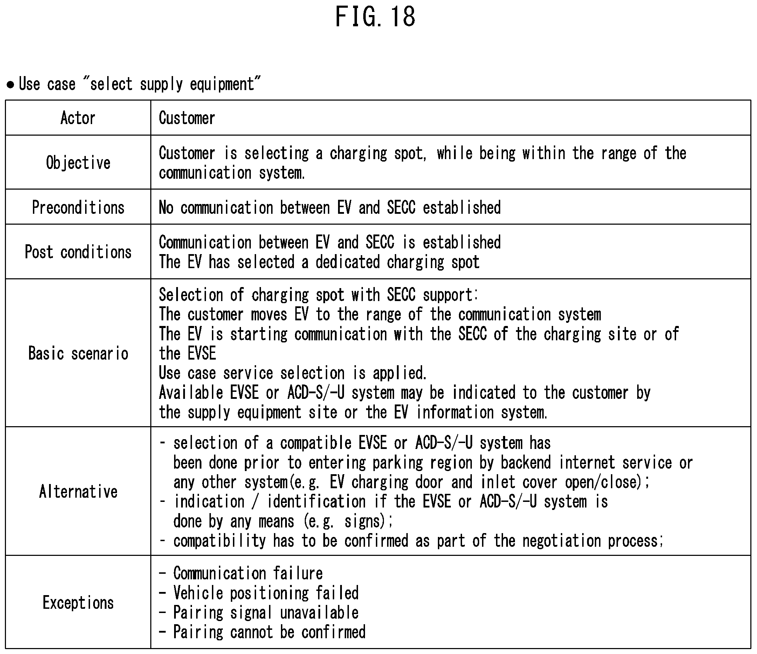

FIG. 18 is a table summarizing details of the operation S1000 shown in FIG. 15 according to an exemplary embodiment.

The description disclosed in the table of FIG. 18 is directed to the EVSE selection operation S1000 performed by the electric vehicle 100 to select a charging spot. It is assumed that the communications between the electric vehicle 100 and the supply equipment communication controller (SECC) is not established yet. Results of the execution of the process shown in FIG. 18 may include an establishment of a communication between the electric vehicle 100 and the SECC, and a selection of a dedicated charging spot by the electric vehicle 100.

Referring to FIG. 18, a basic scenario, alternatives, and exceptions may be specified in addition to the above-mentioned objective, prerequisite conditions, and post conditions of the operation S1000.

The basic scenario may describe as a process that the electric vehicle 100 selects a charging spot with the support of the SECC. The basic scenario may begin with an operation that the electric vehicle 100 moves into a range of the communication system. The electric vehicle 100 may start communications with the EVSE or SECC of the charging site.

A use case of service selection may be applied.

Available EVSE or ACD-S or ACD-U system may be provided to a customer, i.e. the electric vehicle 100 or its user, by the supply equipment (SE) site or an EV information system.

Alternatively, a selection of a compatible EVSE or ACD-S or ACD-U system may have been accomplished prior to entering the parking region by a backend Internet service or other system.

Alternatively, it may be indicated or identified by any means that the EVSE or ACD-S or ACD-U system is complete.

Alternatively, compatibility may be confirmed as a part of a negotiation process.

The exceptions may include any communication failure, a vehicle positioning failure, and situations that a pairing signal is not available or the pairing is not confirmed.

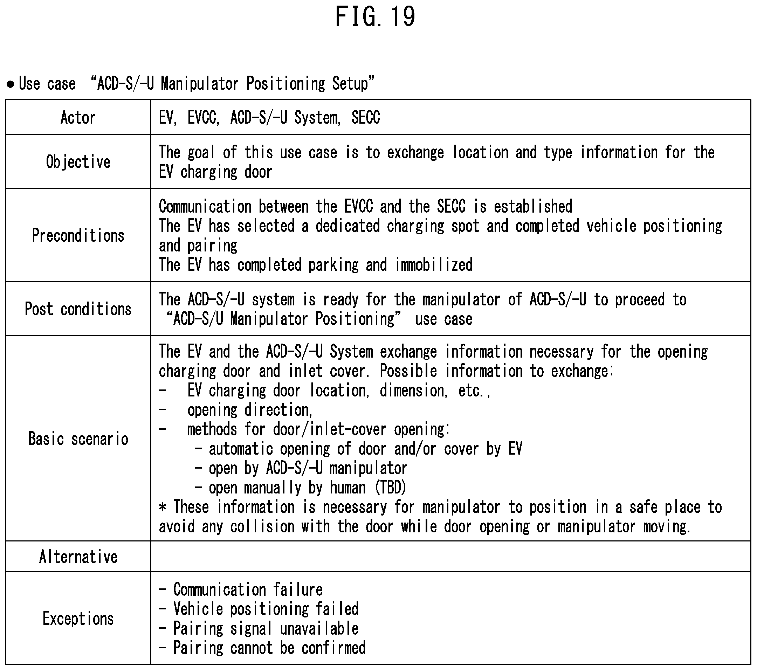

FIG. 19 is a table summarizing details of the operation S1112 shown in FIG. 13 according to an exemplary embodiment.

The description disclosed in the table of FIG. 19 is directed to a protocol for the ACD-S/-U manipulator positioning setup operation S1112, in which at least one entity among the electric vehicle 100, the electric vehicle communication controller (EVCC), the ACD-S or ACE-U system, and the SECC participates.

The objective of the description summarized in FIG. 19 may be to define a use case for exchanging location and type information of the charging door of the electric vehicle 100.

As prerequisite conditions, it may be assumed that the communication between the EVCC and the SECC is established, and the EV has selected a charging spot and completed the vehicle positioning and pairing.

Additionally, it may be assumed that the EV has completed parking and immobilized.

The post condition obtained by performing the operation S1112 is that the ACD-S/-U system is ready for the ACD-S or ACD-U type manipulator to proceed with the positioning.

The basic scenario may describe an operation of exchanging the information necessary for the opening of the charging door and the inlet cover between the electric vehicle and the ACD-S/-U system.

Exchangeable information may include the location and the dimension of the charging door in the electric vehicle, the opening direction of the charging door, and the method for opening the charging door and the inlet cover. The Information on the method for opening the charging door and the inlet cover may include: whether the charging door and/or the inlet cover can be opened automatically by the electric vehicle, whether the charging door and/or the inlet cover can be opened by the ACD-S/-U manipulator, or whether the charging door and/or the inlet cover is to be opened manually by a human.

In addition, information necessary for the charging manipulator to position in a safe place to avoid collision with the charging door while the charging door is opening or the charging manipulator is moving may be included further.

The exceptions may include the communication failure, the vehicle positioning failure, and the situations that the pairing signal is not available or the pairing is not confirmed.

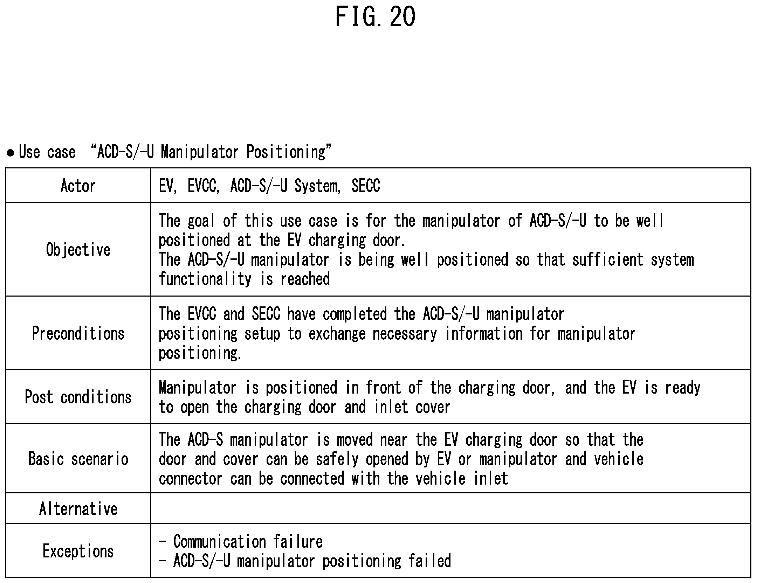

FIG. 20 is a table summarizing details of the operation S1114 shown in FIG. 13 according to an exemplary embodiment.

The description disclosed in the table of FIG. 20 is directed to a protocol for the ACD-S/-U manipulator positioning operation S1114, in which at least one entity among the electric vehicle 100, the EVCC, the ACD-S/-U system, and the SECC participates.

The objective of the description summarized in FIG. 20 may be to define a use case for exchanging location and type information of the charging door of the electric vehicle 100.

The charging manipulator of the ACD-S/-U system may be understood as being positioned well when the charging manipulator is positioned such that a sufficient system functionality may be reached.

As prerequisite conditions, it may be assumed that the EVCC and the SECC have completed the ACD-S/-U manipulator positioning setup and exchanged necessary information for the charging manipulator positioning.

The post condition obtained by performing the operation S1114 may be that the charging manipulator is positioned in front of the charging door and the EV is ready to open the charging door and the inlet cover.

The basic scenario may involve the movement of the ACD-S manipulator. The ACD-S manipulator may move to the vicinity of the charging door of the EV so that the charging door and/or the inlet cover can be safely opened by the EV or the charging manipulator. When the positioning of the charging manipulator is completed, a connector for charging the EV can be connected to the charging inlet.

The exceptions may include the communication failure and a situation that the positioning of the ACD-S/-U manipulator failed.

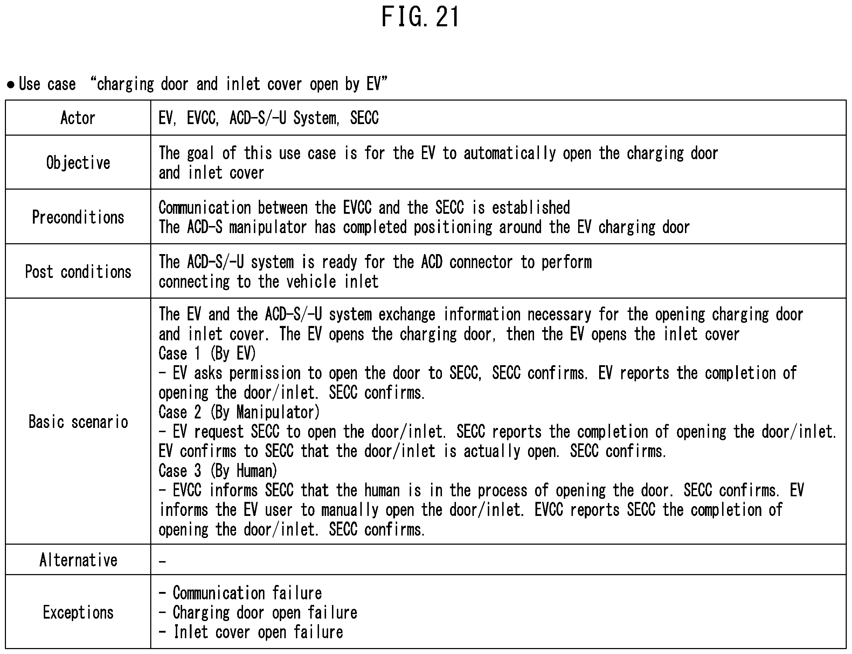

FIG. 21 is a table summarizing details of the operations S1120 and S1130 shown in FIG. 13 according to an exemplary embodiment.

The description disclosed in the table of FIG. 21 is directed to a protocol for the opening the charging door and the inlet cover (i.e., operations S1120 and S1130), in which at least one entity among the electric vehicle 100, the EVCC, the ACD-S/-U system, and the SECC participates.

The objective of the description summarized in FIG. 21 may be to define a use case for the EV to open the charging door and the inlet cover.

As prerequisite conditions, it may be assumed that the communication between the EVCC and the SECC is established and the ACD-S manipulator has completed positioning around the charging door of the EV. The ACD-S manipulator or the SECC may notify the EVCC that the ACD-S manipulator has completed positioning around the charging door of the EV, and the EVCC may reply to acknowledge the receipt of the notification.

The post condition may be a state that the ACD-S/-U system is ready for the ACD connector to perform connecting to the inlet of the vehicle.

The basic scenario may involve operations that the EV and the ACD-S/-U system exchange information necessary for opening the charging door and the inlet cover and then the EV opens the charging door and the inlet cover to consequently ensure a condition that the charging door and the inlet cover are open.

In case 1, the EV may open the charging door and the inlet cover. The EV may ask a permission to open the charging door to the SECC. When the SECC confirms, the EV may automatically open the charging door and the inlet cover. The EV may report the completion of the opening of the charging door and the inlet cover. Upon receiving a confirmation from the SECC, the EV may proceed next steps.

In case 2, the charging manipulator may open the charging door and the inlet cover. The EV may request the SECC to open the charging door and the inlet cover. The SECC may report the completion of the opening of the charging door and the inlet cover. The EV may confirm to the SECC that the charging door and the inlet cover are actually open. Upon receiving a confirmation from the SECC, the EV may proceed next steps.

In case 3, it is assumed that a human has to open the charging door and the inlet cover. The EVCC may inform the SECC that a human is in a process of opening the door. Upon receiving a confirmation from the SECC, the EV may inform the EV user that the manual opening of the inlet cover and the charging door is possible. The EVCC may report the completion of the opening of the charging door and the inlet cover to the SECC. Upon receiving a confirmation from the SECC, the EV may proceed next steps.

The exceptions may include the communication failure, a charging door opening failure, and an inlet cover opening failure.

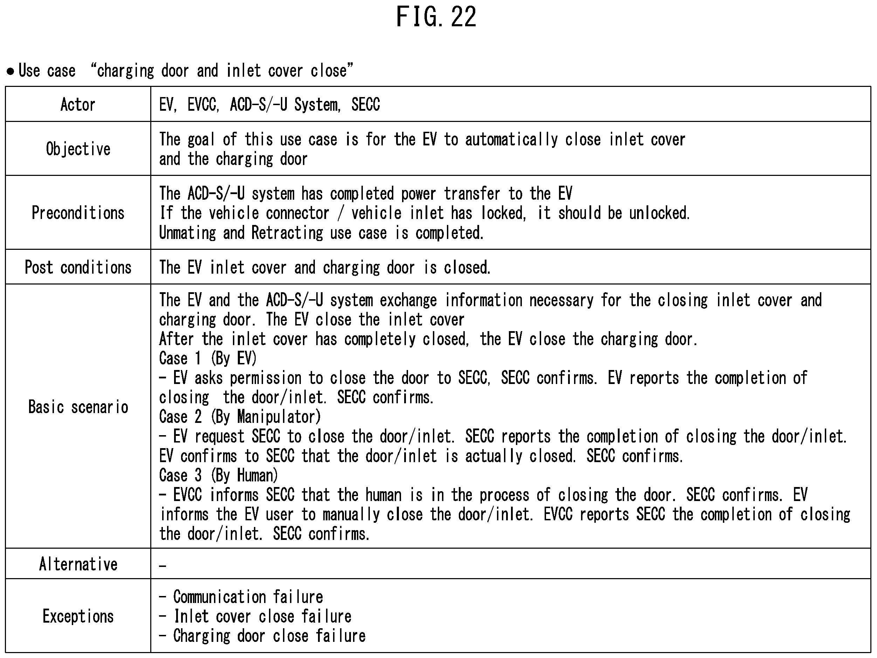

FIG. 22 is a table summarizing details of the operations S1230 and S1240 shown in FIG. 14 according to an exemplary embodiment.

The description disclosed in the table of FIG. 22 is directed to a protocol for closing the charging door and the inlet cover (i.e. operations S1120 and S1130), in which at least one entity among the electric vehicle 100, the EVCC, the ACD-S/-U system, and the SECC participates.

The objective of the description summarized in FIG. 21 may be to define a use case for the EV to close the charging door and the inlet cover.

As prerequisite conditions, it may be assumed that the communication between the EVCC and the SECC is established, a vehicle connector or the inlet is unlocked if it has been locked, and an unmating and retracting use case is completed.

The post condition may be a state that the inlet cover and the charging door are closed.

The basic scenario may involve operations that the EV and the ACD-S/-U system exchange information necessary for closing the inlet cover and the charging door and then the EV closes the inlet cover and the charging door to consequently ensure a condition that the inlet cover and the charging door are closed.

After the closing of the inlet cover is completed, the charging door may be closed.

In case 1, the EV may close the inlet cover and the charging door. The EV may ask a permission to close the door to the SECC. When the SECC confirms, the EV may automatically close the inlet cover and the charging door. The EV may report the completion of the closing of the inlet cover and the charging door. Upon receiving a confirmation from the SECC, the EV may proceed next steps.

In case 2, the charging manipulator may close the inlet cover and the charging door. The EV may request the SECC to close the inlet cover and the charging door. The SECC may report the completion of the closing of the inlet cover and the charging door. The EV may confirm to the SECC that the inlet cover and the charging door are actually closed. Upon receiving a confirmation from the SECC, the EV may proceed next steps.

In case 3, it is assumed that a human has to close the inlet cover and the charging door. The EVCC may inform the SECC that a human is in a process of closing the door. Upon receiving a confirmation from the SECC, the EV may inform the EV user that the manual closing of the inlet cover and the charging door is possible. The EVCC may report the completion of the closing of the inlet cover and the charging door to the SECC. Upon receiving a confirmation from the SECC, the EV may proceed next steps.

The exceptions may include the communication failure, a charging door closing failure, and an inlet cover closing failure.

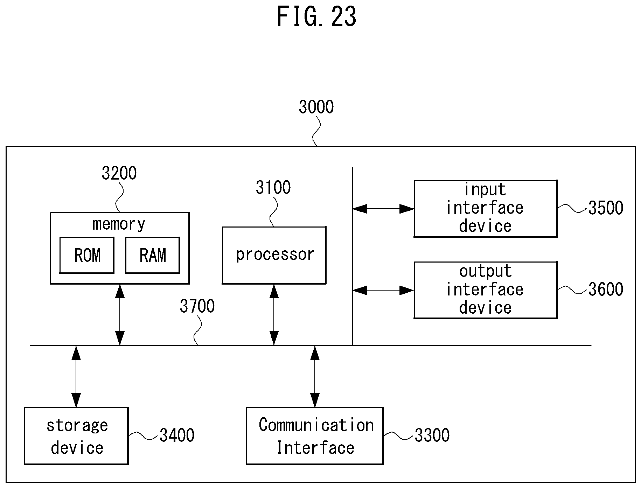

FIG. 23 is a block diagram illustrating a general configuration of hardware that controls the opening and closing of the charging door or charging port 130 in preparation for the charging of the electric vehicle in relation to the electric vehicle charging system 210 and/or the charging manipulator 220 according to an embodiment of the present disclosure.

For convenience of explanation, the hardware that controls the sequence related to the opening and closing of the charging door or charging port 130 may be referred to as a controller 3000.

The controller 3000 may be disposed on the electric vehicle 100 side, on the electric vehicle supply equipment (EVSE) side, or on the power transfer device or pad 210 side.

The controller 3000 may include at least one processor 3100, a memory 3200 storing at least one instruction for performing the operations described above through the processor 3100, and a communication interface 3300 connected to a network to perform communications. The controller 3000 for wireless power transfer may further include a storage device 3400 capable of storing the at least one instruction for performing the operations described above or data generated during the execution of the instruction. The controller 3000 for wireless power transfer may further include an input interface 3500 and an output interface 3600 for interactions with a user. The components of the controller 3000 for wireless power transfer may be connected to each other by a system bus 3700 to communicate with each other.

The processor 3100, which executes the program instructions or commands stored in the memory 3200, may include a central processing unit (CPU) or a graphics processing unit (GPU) or may be implemented by another kind of dedicated processor suitable for performing the method of the present disclosure.

Each of the memory 3200 and the storage device 3400 may be comprised of at least one of a volatile storage medium and/or a non-volatile storage medium. For example, the memory 3200 may be comprised of at least one of a read only memory (ROM) and/or a random access memory (RAM).

Here, the at least one instruction may include at least one of: a sequence suitable for identifying at least one of the electric vehicle 100, the electric vehicle supply equipment (EVSE), the power transfer device or pad 210, and the charging manipulator 220, a sequence suitable for associating two or more devices among the electric vehicle 100, the electric vehicle supply equipment (EVSE), the power transfer device or pad 210, and the charging manipulator 220 through wireless communications, a sequence suitable for performing the alignment and/or the pairing through positioning of a counterpart device, and/or a sequence suitable for allowing to supply an alternating current power for the power transfer after the alignment and/or the pairing.

The at least one instruction may include at least one of: a sequence suitable for exchanging information to open the charging door and/or the inlet cover between the electric vehicle 100 and the charging manipulator 220, a sequence suitable for providing or requesting information necessary to actually open the charging door and/or the inlet cover and actually opening the charging door and/or the inlet cover in response to a request, a sequence suitable for check whether the charging door and/or the inlet cover is open or not, reporting a status based on a check result, confirming the status in a report, mating the connector with the inlet, performing the power transfer process, and/or unmating, a sequence suitable for closing the charging door and/or the inlet cover, a sequence suitable for allow the vehicle to safely leave the parking space.

The method of controlling and operating peripheral devices to open and close the charging door or charging port of the electric vehicle 100 according to exemplary embodiments of the present disclosure may be implemented as computer instructions which can be executed by various computer means, and recorded on a non-transitory computer-readable medium. The computer-readable medium may include program instructions, data files, data structures or a combination thereof. Program instructions recorded on the medium may be particularly designed and structured for the inventive concept or available to those skilled in computer software. Examples of the computer-readable medium may include a hardware device specifically configured to store the program instructions such as magnetic media such as a hard disk, a floppy disk, and a magnetic tape, optical media such as a compact disk read only memory (CD-ROM) and a digital video disk (DVD), magneto-optical medium such as a floptical disk, and semiconductor memories such as ROM, RAM, and a flash memory. The program instructions may include not only machine language codes generated by a compiler, but also high-level language codes executable by a computer using an interpreter or the like. The hardware devices may be replaced by software modules that is executable to perform the operation of the exemplary embodiments, and vice versa.

Some aspects of the present disclosure described above in the context of the device may indicate corresponding descriptions of the method according to the present disclosure, and the blocks or devices may correspond to operations of the method or features of the operations. Similarly, some aspects described in the context of the method may be expressed by features of blocks, items, or devices corresponding thereto. Some or all of the operations of the method may be performed by (or using) a hardware device such as a microprocessor, a programmable computer, or electronic circuits, for example. In some exemplary embodiments, one or more of the most important operations of the method may be performed by such a device.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The present disclosure is not limited by the exemplary embodiments. The same reference numerals in the drawings may indicate the same members. The length, height, size, width, etc. introduced in the embodiments and the drawings may have been exaggerated to aid the understanding of the exemplary embodiments of the present disclosure.

The description of the disclosure may be merely exemplary in nature and, thus, variations that do not depart from the substance of the disclosure may be intended to be within the scope of the disclosure. Such variations may not be to be regarded as a departure from the spirit and scope of the disclosure. Thus, it will be understood by those of ordinary skill in the art that various changes in form and details may be made without departing from the spirit and scope as defined by the following claims.

Accordingly, the scope of the disclosure should not be limited by the exemplary embodiments, but is to be interpreted in light of the appended claims and equivalents thereof door.

### INDUSTRIAL APPLICABILITY

According to an exemplary embodiment, provided is a procedure for positioning a charging manipulator with respect to an electric vehicle and for preparatory operations for a power transfer in consideration of various types of the charging port of the electric vehicle, various types of the electric vehicle supply equipment, and various charging schemes that may be used when electric power is supplied from a power supply device or an electric vehicle supply equipment (EVSE) to the electric vehicle.

According to an exemplary embodiment, provided is a control procedure for opening and closing the charging port of the electric vehicle to respond to various types of the charging inlet of the electric vehicle, various types of the electric vehicle supply equipment, and various charging schemes.

According to an exemplary embodiment, provided is a control procedure for opening and closing a charging inlet of the electric vehicle to respond to various types of the charging inlet of the electric vehicle, various types of the electric vehicle supply equipment, and various charging schemes.

According to an exemplary embodiment, provided is a procedure for operations of the positioning of the charging manipulator with respect to the electric vehicle, a mating of the charging manipulator and the electric vehicle, and an unmating of the charging manipulator and the electric vehicle after a completion of the charging to respond to various types of the charging port of the electric vehicle, various types of the electric vehicle supply equipment, and various charging schemes.

According to an exemplary embodiment, provided is a positioning procedure for positioning the charging manipulator with respect to the electric vehicle taking into account characteristics of a parking space of the electric vehicle, the type of the parking space, and a state of the electric vehicle while the charging is in progress.

## Claims

1. A method of controlling opening and closing of a charging door of an electric vehicle performed by an electric vehicle supply equipment (EVSE) comprising a charging manipulator, the method comprising:
positioning the charging manipulator at a position corresponding to the charging door of the electric vehicle;
performing a protocol for opening the charging door;
checking whether the charging door is opened or not; and
coupling the charging manipulator to an inlet of the charging door.

2. The method of controlling the opening and closing of the charging door according to claim 1, further comprising:
unmating the charging manipulator from the inlet when a power transfer process for the electric vehicle is completed or terminated;
performing a protocol for closing the charging door; and
checking whether the charging door is closed or not.

3. The method of controlling the opening and closing of the charging door according to claim 1, further comprising:
receiving, from the electric vehicle, at least one of a shape, an opening type, or an opening direction of the charging door.

4. The method of controlling the opening and closing of the charging door according to claim 1, further comprising:
receiving, from the electric vehicle, information on whether an inlet cover is formed independently from the charging door or not.

5. The method of controlling the opening and closing of the charging door according to claim 1, further comprising:
performing a protocol for opening an inlet cover of the electric vehicle before the charging manipulator is coupled to the inlet in a state that charging door is found to be open; and
checking whether the inlet cover is opened or not.

6. The method of controlling the opening and closing of the charging door according to claim 2, further comprising:
before performing the protocol for closing the charging door in a state that the charging door is found to be unmated from the inlet, performing a protocol for closing the inlet cover; and
checking whether the inlet cover is closed or not.

7. The method of controlling the opening and closing of the charging door according to claim 1, wherein the positioning the charging manipulator at the position corresponding to the charging door of the electric vehicle comprises:
determining a moving path of the charging manipulator, to move the charging manipulator to the position corresponding to the charging door, based on at least one of a position of the charging door relative to the electric vehicle, a distance from the electric vehicle to an adjacent vehicle, or a distance from the electric vehicle to the adjacent vehicle on an assumption that the charging door is opened.

8. The method of controlling the opening and closing of the charging door according to claim 1, wherein the performing the protocol for opening the charging door comprises:
sharing with the electric vehicle that the charging manipulator is positioned at the position corresponding to the charging door;
receiving, from the electric vehicle, a request for permission to open the charging door; and
receiving, from the electric vehicle, a notification indicating that the charging door is opened.

9. The method of controlling the opening and closing of the charging door according to claim 1, wherein the performing the protocol for opening the charging door comprises:
sharing with the electric vehicle that the charging manipulator is positioned at the position corresponding to the charging door;
receiving, from the electric vehicle, a request to open the charging door;
controlling the charging manipulator to open the charging door based on at least one of a shape, an opening type, or an opening direction of the charging door; and
receiving, from the electric vehicle, a notification indicating that the charging door is opened.

10. The method of controlling the opening and closing of the charging door according to claim 1, wherein the performing the protocol for opening the charging door comprises:
sharing with the electric vehicle that the charging manipulator is positioned at the position corresponding to the charging door;
receiving, from the electric vehicle, a notification indicating that a process of opening the charging door by a manual manipulation of a human is in progress; and
receiving, from the electric vehicle, a notification indicating that the charging door is opened.

11. An electric vehicle supply equipment (EVSE) apparatus suitable for transferring electric power to an electric vehicle and including a charging manipulator, comprising:
a memory configured to store at least one program instruction;
a processor configured to load and execute the at least one program instruction to control a movement of the charging manipulator; and
a communication interface configured to transmit and receive information necessary for a power transfer process for the electric vehicle to and from the electric vehicle,
wherein the processor is configured to:
control the charging manipulator to position the charging manipulator at a position corresponding to a charging door of the electric vehicle,
perform a protocol for opening the charging door by communicating with the electric vehicle through the communication interface,
check whether the charging door is opened or not, and
control the charging manipulator such that the charging manipulator is coupled to an inlet of the charging door in a state that the charging door is opened.

12. The EVSE apparatus according to claim 11, wherein the processor is configured to:
control the charging manipulator such that the charging manipulator is unmated from the inlet when the power transfer process for the electric vehicle is completed or terminated;
perform a protocol for closing the charging door by communicating with the electric vehicle through the communication interface; and
check whether the charging door is closed or not.

13. The EVSE apparatus according to claim 11, wherein the processor is configured to receive, from the electric vehicle, at least one of a shape, an opening type, or an opening direction of the charging door by communicating with the electric vehicle through the communication interface.

14. The EVSE apparatus according to claim 11, wherein the processor is configured to receive, from the electric vehicle, information on whether an inlet cover is formed independently from the charging door or not by communicating with the electric vehicle through the communication interface.

15. The EVSE apparatus according to claim 11, wherein the processor is configured to determine a moving path of the charging manipulator, to move the charging manipulator to the position corresponding to the charging door, based on at least one of a position of the charging door relative to the electric vehicle, a distance from the electric vehicle to an adjacent vehicle, or a distance from the electric vehicle to the adjacent vehicle on an assumption that the charging door is opened.

16. A method of controlling opening and closing of a charging door of an electric vehicle performed by the electric vehicle capable of communicating with an electric vehicle supply equipment (EVSE) comprising a charging manipulator, the method comprising:
receiving information on whether the charging manipulator is positioned at a position corresponding to the charging door of the electric vehicle;
performing a protocol for opening the charging door;
checking whether the charging door is opened or not; and
recognizing whether the charging manipulator is coupled to the charging door.

17. The method of controlling the opening and closing of the charging door according to claim 16, further comprising:
receiving identification information for a plurality of EVSEs; and
selecting the EVSE comprising the charging manipulator among the plurality of EVSEs.

18. The method of controlling the opening and closing of the charging door according to claim 16, further comprising:
guiding a user to move and park the electric vehicle within an operating range of the EVSE comprising the charging manipulator among the plurality of EVSEs, or guiding the user to park the electric vehicle within the operating range of the EVSE comprising the charging manipulator.

19. The method of controlling the opening and closing of the charging door according to claim 16, further comprising:
providing the EVSE with at least one of information on whether the electric vehicle can automatically open the charging door or information on whether the electric vehicle can automatically close the charging door.

20. The method of controlling the opening and closing of the charging door according to claim 16, further comprising:
receiving, from the EVSE, at least one of information on whether the charging manipulator can automatically open the charging door or information on whether the charging manipulator can automatically close the charging door.
